Europäisches Patentamt

European Patent Office

Office européen des brevets

(19)

(11) EP 0 982 066 B1

(12) **EUROPÄISCHE PATENTSCHRIFT**

(45) Veröffentlichungstag und Bekanntmachung des Hinweises auf die Patenterteilung:
**13.10.2004 Patentblatt 2004/42**

(51) Int Cl.$^7$: **B01D 53/94**, F01N 3/08

(21) Anmeldenummer: **99116462.5**

(22) Anmeldetag: **21.08.1999**

(54) **Stickoxid-Speichermaterial und daraus hergestellter Stickoxid-Speicherkatalysator, Verfahren zu dessen Herstellung und seine Verwendung**

Nitrogen oxide storage material and nitrogen oxide storage catalyst prepared therefrom, process for its preparation and use thereof

Matériau de stockage d'oxyde d'azote et catalyseur accumulateur d'oxyde d'azote le comprenant, procédé pour sa fabrication et son utilisation

(84) Benannte Vertragsstaaten:
**AT BE CH CY DE DK ES FI FR GB GR IE IT LI LU MC NL PT SE**

(30) Priorität: **24.08.1998 DE 19838282**

(43) Veröffentlichungstag der Anmeldung:
**01.03.2000 Patentblatt 2000/09**

(73) Patentinhaber: **Umicore AG & Co. KG**
**63457 Hanau-Wolfgang (DE)**

(72) Erfinder:
• **Strehlau, Wolfgang, Dr.**
**69221 Dossenheim (DE)**
• **Göbel, Ulrich, Dr.**
**65795 Hattersheim (DE)**
• **Mussmann, Lothar, Dr.**
**63067 Offenbach (DE)**
• **Domesle, Rainer, Dr.**
**63755 Alzenau-Kälberau (DE)**

(74) Vertreter: **Stellbrink, Axel et al**
**Vossius & Partner**
**Siebertstrasse 4**
**81675 München (DE)**

(56) Entgegenhaltungen:
**EP-A- 0 556 554      EP-A- 0 664 147**
**WO-A-97/02886      WO-A-98/16472**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Stickoxid-Speichermaterial, welches wenigstens eine Speicherkomponente für Stickoxide in Form eines Oxides, Carbonates oder Hydroxides der Erdalkalimetalle Magnesium, Calcium, Strontium und Barium sowie der Alkalimetalle Kalium und Cäsium auf einem Trägermaterial enthält.

Auf dem Sektor der Benzinmotoren wurden zur Verminderung des Kraftstoffverbrauchs sogenannte Magermotoren entwikkelt, die im Teillastbetrieb mit mageren Luft/Kraftstoffgemischen betrieben werden. Ein mageres Luft/Kraftstoffgemisch enthält eine höhere Sauerstoffkonzentration als für die vollständige Verbrennung des Kraftstoffes benötigt wird. Im entsprechenden Abgas liegen dann die oxidierenden Komponenten Sauerstoff ($O_2$), Stickoxide ($NO_x$) im Überschuß gegenüber den reduzierenden Abgaskomponenten Kohlenmonoxid (CO), Wasserstoff ($H_2$) und Kohlenwasserstoffen (HC) vor. Mageres Abgas enthält gewöhnlich 3 bis 15 Vol.-% Sauerstoff. Innerhalb des Last- und Vollastbetriebs erfolgt aber auch bei mager betriebenen Ottomotoren eine stöchiometrische oder sogar unterstöchiometrische, das heißt fette, Luft/Kraftstoffaufbereitung.

Dieselmotoren arbeiten dagegen unter sämtlichen Betriebsbedingungen mit weit überstöchiometrischen Luft/Kraftstoffgemischen.

Wegen des hohen Sauerstoffgehaltes des Abgases von Magermotoren oder Dieselmotoren können die in ihm enthaltenen Stickoxide nicht wie bei stöchiometrisch betriebenen Otto-Motoren mit Hilfe von sogenannten Dreiweg-Katalysatoren unter gleichzeitiger Oxidation von Kohlenwasserstoffen und Kohlenmonoxid zu Stickstoff reduziert werden.

Zur Entfernung der Stickoxide aus diesen Abgasen wurden deshalb Stickoxid-Speicherkatalysatoren entwikkelt, die die im mageren Abgas enthaltenen Stickoxide in Form von Nitraten speichern.

Die Arbeitsweise von Stickoxid-Speicherkatalysatoren wird ausführlich in der SAE-Schrift SAE 950809 beschrieben. Stickoxid-Speicherkatalysatoren bestehen demgemäß aus einem Katalysatormaterial, welches zumeist in Form einer Beschichtung auf einem inerten Wabenkörper aus Keramik oder Metall, einem sogenannten Tragkörper, aufgebracht ist. Das Katalysatormaterial enthält das Stickoxid-Speichermaterial und eine katalytisch aktive Komponente. Das Stickoxid-Speichermaterial wiederum besteht aus der eigentlichen Stickoxid-Speicherkomponente, die auf einem Trägermaterial in hochdisperser Form abgeschieden ist.

Als Speicherkomponenten werden vorwiegend die basischen Oxide der Alkalimetalle, der Erdalkalimetalle und der Seltenerdmetalle, insbesondere aber Bariumoxid, eingesetzt, welche mit Stickstoffdioxid zu den entsprechenden Nitraten reagieren. Es ist bekannt, daß diese Materialien an Luft zum überwiegenden Teil in Form von Carbonaten und Hydroxiden vorliegen. Diese Verbindungen eignen ebenfalls zur Speicherung der Stickoxide. Wenn daher im Rahmen der Erfindung von den basischen Speicheroxiden gesprochen wird, so sind damit auch die entsprechenden Carbonate und Hydroxide eingeschlossen.

Als katalytisch aktive Komponenten werden gewöhnlich die Edelmetalle der Platingruppe verwendet, die in der Regel gemeinsam mit der Speicherkomponente auf dem Trägermaterial abgeschieden werden. Als Trägermaterial wird überwiegend aktives, hochoberflächiges Aluminiumoxid eingesetzt.

Die Aufgabe der katalytisch aktiven Komponenten ist es, im mageren Abgas Kohlenmonoxid und Kohlenwasserstoffe zu Kohlendioxid und Wasser umzusetzen. Außerdem sollen sie den Anteil des Abgases an Stickstoffmonoxid zu Stickstoffdioxid oxidieren, damit es mit dem basischen Speichermaterial zu Nitraten reagieren kann. Mit zunehmender Einlagerung der Stickoxide ins Speichermaterial nimmt die Speicherkapazität des Materials ab und muß daher von Zeit zu Zeit regeneriert werden. Hierzu wird der Motor für kurze Zeit mit stöchiometrisch zusammengesetzten oder fetten Luft/Kraftstoff-Gemischen betrieben. Unter den reduzierenden Bedingungen im fetten Abgas werden die gebildeten Nitrate zu Stickoxiden $NO_x$ zersetzt und unter Verwendung von Kohlenmonoxid, Wasserstoff und Kohlenwasserstoffen als Reduktionsmittel zu Stickstoff unter Bildung von Wasser und Kohlendioxid reduziert. Der Speicherkatalysator arbeitet während dieser Betriebsphase als Dreiwegkatalysator.

Ein wesentliches Problem der Speichermaterialien ist ihre ungenügende Alterungsstabilität bei hohen Temperaturen. Wie im SAE Technical Paper 970746 gezeigt wurde, besteht ein wesentlicher Alterungsmechanismus von Stickoxid-Speichermaterialien darin, daß die eigentliche Speicherkomponente mit dem Trägermaterial reagiert. So wurde bei einem Speichermaterial aus Bariumoxid auf Zirkonoxid, welches für die Dauer von 24 Stunden bei 750°C gealtert wurde, die Bildung von Bariumzirkonat $BaZrO_3$ beobachtet. Bariumoxid auf Titanoxid führte zur Bildung von Bariumtitanat. In beiden Fällen war diese Reaktion der Speicherkomponente mit dem Trägermaterial mit einem hohen Verlust an Stickoxid-Speicherfähigkeit verbunden. Zirkonoxid und Titanoxid sind somit wegen ihrer hohen Reaktionsneigung mit Bariumoxid nicht als Träger für Alkali- und Erdalkali-Speicherkomponenten geeignet, wenn sie in der Anwendung hohen Temperaturbelastungen ausgesetzt sind. Etwas günstiger verhält sich Aluminiumoxid als Trägermaterial. Aber auch hier tritt bei längerer Alterung bei hohen Temperaturen die Bildung von Bariumaluminat auf.

In der Patentliteratur sind verschiedene Kombinationen von Speicherkomponenten und Trägermaterialien bekannt geworden, die auch das Alterungsproblem lösen sollen. So beschreibt die EP 0 562 516 A1 einen Katalysator aus Bariumoxid, Lanthanoxid und Platin auf einem Trägermaterial aus Aluminiumoxid, Zeolith, Zirkonoxid, Aluminiumsilicat oder Siliciumdioxid, wobei wenigstens ein Teil des Bariumoxids und des Lanthanoxids ein Mischoxid bilden. Durch dieses Mischoxid soll die Bildung von Lanthanaluminat unterdrückt werden, die ansonsten zur Alterung des Katalysators führt.

Zur Unterdrückung der Reaktion der Speicherkomponente mit einem Träger aus Aluminiumoxid schlägt die EP 0 645 173 A2 vor, in dem Träger Lithium derart zu lösen, daß sich eine feste Lösung aus Aluminiumoxid und Lithium bildet.

Die EP 0 653 238 A1 schlägt als Trägermaterial Titanoxid vor, welches wenigstens ein Element aus der Gruppe der Alkalimetalle, der Erdalkalimetalle und der Seltenerdmetalle in Form einer festen Lösung enthält.

Die EP 0 657 204 A1 nennt als Trägermaterialien für Stickoxid-Speicherkatalysatoren die Mischoxide $TiO_2$-$Al_2O_3$, $ZrO_2$-$Al_2O_3$ und $SiO_2$-$Al_2O_3$. Darüber hinaus werden Mischoxide von $TiO_2$, $Al_2O_3$ mit Erdalkalimetallen und Seltenerdmetallen, insbesondere $TiO_2$-$Al_2O_3$-$Sc_2O_3$, $TiO_2$-$Al_2O_3$-$Y_2O_3$, $TiO_2$-$Al_2O_3$-$La_2O_3$ und $TiO_2$-$Al_2O_3$-$Nd_2O_3$, als Trägermaterialien genannt.

Die EP 0 666 103 A1 beschreibt einen Katalysator, welcher auf einem porösen Trägermaterial eine Stickoxid-Speicherkomponente und ein Edelmetall enthält. Als Trägermaterial werden Aluminiumoxid, Zeolith, Zirkonoxid, Aluminiumsilicat und Siliciumdioxid vorgeschlagen. Stickoxid-Speicherkomponente und Edelmetall werden eng benachbart auf denselben Trägerpartikeln abgeschieden. Darüber hinaus kann der Katalysator noch Ceroxid als Sauerstoff-Speicherkomponente enthalten, wobei Ceroxid vom Edelmetall und damit auch von der Speicherkomponente separiert gehalten wird.

Die EP 0 718 028 A1 offenbart ein temperaturbeständiges Stickoxid-Speichermaterial. Die hohe Temperaturbeständigkeit wird dadurch erhalten, daß die Stickoxid-Speicherkomponente im Trägermaterial sehr fein dispergiert wird. Hierzu wird eine Lösung einer Verbindung wenigstens eines Alkalimetalls, eines Erdalkalimetalls und eines Seltenerdmetalls mit einer Lösung eines Oxidsols wenigstens eines Metalles der Gruppe IIIb, IVa und IVb des Periodensystems gemischt und in ein Gel überführt, getrocknet und calciniert. Das resultierende Speichermaterial ist amorph. In den Beispielen wird dieses Speichermaterial unter anderem mit einem Katalysatorpulver, kombiniert, welches Platin auf einem hochoberflächigen Cer/Zirkon-Mischoxid aufweist. Das Cer/Zirkon-Mischoxid bildet hier also das Trägermaterial für die Platinkomponente.

Auch die EP 0 771 584 A1 beschreibt ein temperaturbeständiges Trägermaterial für Katalysatoren, welches ebenfalls aus einem amorphen Mischoxid besteht. Das amorphe Mischoxid setzt sich aus einer Stickoxid-Speicherkomponente aus der Gruppe der Alkalimetalle, der Erdalkalimetalle und der Seltenerdmetalle sowie aus Aluminiumoxid und wenigstens aus einem Oxid aus der Gruppe Titanoxid, Zirkonoxid und Siliciumdioxid zusammen. Das Aluminiumoxid ist ein wichtiger Bestandteil des amorphen Mischoxids und steht zu den Speicherkomponenten in einem molaren Verhältnis von 4 bis 12. Das Trägermaterial kann darüber hinaus noch Ceroxid als Sauerstoff speicherndes Material enthalten. Ceroxid und Stickoxid-Speicherkomponente dürfen nur in einem molaren Verhältnis zwischen 0,5 und 3 zueinander im Trägermaterial vorliegen. Außerhalb dieser Grenzen verschlechtert sich nach Angaben der EP 0 771 584 A1 die Temperaturbeständigkeit.

Die WO 97/02886 beschreibt einen Stickoxid-Speicherkatalysator, bei dem Speicherkomponente und katalytisch aktive Komponente räumlich voneinander getrennt aber benachbart angeordnet sind. Zu diesem Zweck sind Speicherkomponente und katalytische Komponente in zwei übereinanderliegenden Schichten auf einem Tragkörper aufgebracht. Alternativ hierzu können Speicherkomponente und katalytische Komponente auf verschiedenen Trägerpartikeln abgeschieden werden, die dann gemeinsam in Form einer Beschichtung auf dem Tragkörper aufgebracht werden. Als Speichermaterial werden Metalloxide, Metallhydroxide, Metallcarbonate und Metall-Mischoxide beschrieben. Die Metalle können Lithium, Natrium, Kalium, Rubidium, Cäsium, Magnesium, Calcium, Strontium oder Barium sein.

Das Speichermaterial kann gemäß der WO 97/02886 zum Schutz vor Vergiftung durch Schwefel eine Schwefel absorbierende Komponente enthalten, bevorzugt Ceroxid. Dieses Ceroxid kann in Form von Partikeln neben den Partikeln des Speichermaterials vorliegen oder in der Stickoxid-Speicherkomponente dispergiert sein.

Keines der beschriebenen Stickoxid-Speichermaterialien weist eine ausreichende Alterungsstabilität auf. Vielmehr setzt bei allen bekannten Speichermaterialien bei erhöhten Temperaturen (>=700°C) eine Deaktivierung der Stickoxide speichernden Alkali- und Erdalkalioxide durch irreversible Reaktion mit den Trägermaterialien zu den entsprechenden Aluminaten, Zirkonaten, Silicaten, Titanaten usw. ein. Anschließend sind die Alkali- und Erdalkalioxide aufgrund des hierdurch hervorgerufenen Verlusts an Basizität nicht mehr zur Speicherung von Stickoxiden befähigt. Da die Speicherkomponenten im allgemeinen im Vergleich zum Trägeroxid im molaren Unterschuß vorliegen, können in Abhängigkeit von der Zeit, der Abgaszusammensetzung und der Abgastemperatur die Speicherkomponenten vollständig mit dem Trägeroxid zu einem Mischoxid umgesetzt werden.

Die DE 197 13 432 A1 beschreibt ein katalytisches Basismaterial für einen Abgasreinigungskatalysator, welches durch Imprägnieren von Ceroxidpulver mit einer Barium enthaltenden Lösung und Calcinieren der Ceroxidteilchen bei etwa 400 bis 1100°C zum Bilden und Anreichern von Bariumoxiden an den Oberflächen der Ceroxidteilchen erhalten wird. Gemäß dieser Schrift wird ein Gemisch aus Bariumoxiden und Ceroxidteilchen auf eine relativ hohe Temperatur erhitzt, um beabsichtigt grobkörnige Bariumoxide an den Oberflächen der Ceroxidteilchen zu bilden. Hierfür sind Temperaturen von 800 bis 1100°C wirkungsvoll. Bevorzugt werden die Ceroxidteilchen bei 900°C für die Dauer von 24 Stunden calciniert. Hierbei ergeben sich Korngrößen der Bariumoxidteilchen zwischen 7 und 14 μm. Bei einer Calciniertemperatur von 200°C weisen die Bariumoxidteilchen noch eine mittlere Korngröße von 1,9 μm auf.

Das katalytische Basismaterial gemäß der DE 197 13 432 A1 dient zur Herstellung eines Katalysators, welcher besonders wirkungsvoll ist, wenn er an einem Motor mit Magerverbrennung betrieben wird. Bei diesem Katalysator handelt es sich also um einen sogenannten Lean-$NO_x$-Katalysator, welcher bei vorhandensein von ausreichenden, reduktiven Abgaskomponenten (Kohlenmonoxid und Kohlenwasserstoffe) in der Lage ist, Stickoxide auch im konstant mageren Abgas umzusetzen. Das katalytische Basismaterial erhöht die Temperaturbeständigkeit des Katalysators. Über eine mögliche Stickoxid-Speicherfähigkeit des katalytischen Basismaterials macht die DE 197 13 432 A1 keine Angaben.

Es ist Aufgabe der vorliegenden Erfindung, ein Stickoxid-Speichermaterial anzugeben, welches sich durch einen hohen Speicherwirkungsgrad bei gleichzeitig wesentlich verbesserter Alterungsstabilität auszeichnet. Weitere Gegenstände der Erfindung sind ein Verfahren zur Herstellung des Speichermaterials sowie ein mit dem Speichermaterial hergestellter Stickoxid-Speicher auf einem inerten Tragkörper, ein Stickoxid-Speicherkatalysator durch Kombination des Speichermaterials mit Edelmetallen der Platingruppe sowie die Verwendung des Stickoxid-Speichers und des Speicherkatalysators für die Behandlung des Abgases von mager betriebenen Verbrennungsmotoren.

Diese Aufgabe wird durch ein Stickoxid-Speichermaterial gelöst, welches wenigstens eine Speicherkomponente für Stickoxide in Form von Partikeln eines Oxides, Carbonates oder Hydroxides der Erdalkalimetalle Magnesium, Calcium, Strontium und Barium sowie der Alkalimetalle Kalium und Cäsium auf einem Trägermaterial enthält. Das Trägermaterial hat eine spezifische Oberfläche von wenigstens 10m$^2$/g und ist aus der Gruppe dotiertes Ceroxid, Cer/Zirkon-Mischoxid mit einem Zirkonoxidgehalt von 1 bis 25 Gew.-%, bezogen auf das Gesamtgewicht des mischoxids, Calciumtitanat, Strontiumtitanat, Bariumtitanat, Bariumstannat, Bariumzirkonat, Magnesiumoxid, Lanthanoxid, Praseodymoxid, Samariumoxid, Neodymoxid, Yttriumoxid, Yttriumbariumcuprat, Bleititanat, Zinntitanat, Wismuttitanat, Lanthancobaltat, Lanthanmanganat und Bariumcuprat oder Mischungen davon und daß die Partikel der Speicherkomponente mittlere Partikeldurchmesser von weniger als 1,5 μm aufweisen.

Die zu verwendenden Trägermaterialien lassen sich in vier Gruppen einteilen. Zur ersten Gruppe gehören Trägermaterialien auf der Basis von Ceroxid. Es handelt sich um dotiertes Ceroxid und um Cer/Zirkon-Mischoxide. Unabhängig von der Art der Herstellung weisen diese Materialien eine weitgehend kristalline Struktur auf, sind also nicht amorph. In der zweiten Gruppe befinden sich stöchiometrisch zusammengesetzte Mischoxide aus den Oxiden der Speicherkomponente und Trägeroxiden. Als Beispiel sei Bariumtitanat als Mischoxid des Bariumoxids und Titanoxids genannt. Zu dieser Gruppe gehören also Calciumtitanat, Strontiumtitanat, Bariumtitanat, Bariumstannat und Bariumzirkonat. Die dritte Gruppe umfaßt die reinen Oxide Magnesiumoxid, Lanthanoxid, Praseodymoxid, Samariumoxid, Neodymoxid und Yttriumoxid. Die vierte Gruppe umfaßt die weiteren Mischoxide Yttriumbariumcuprat, Bleititanat, Zinntitanat, Wismuttitanat, Lanthancobaltat, Lanthanmanganat und Bariumcuprat.

Es wurde gefunden, daß ein aktives und alterungsstabiles Speichermaterial dann erhalten wird, wenn das verwendete Trägermaterial für die Speicherkomponenten nur eine geringe oder keine Neigung zur Reaktion mit den Speicherkomponenten aufweist und gleichzeitig stabil gegenüber den wechselnd mageren und fetten Abgaszusammensetzungen von Magermotoren ist, das heißt die spezifische Oberfläche der Trägermaterialien sollte weitgehend stabil unter den realen Abgasbedingungen von Magermotoren sein.

Die theoretische Speicherkapazität des Speichermaterials ergibt sich aus der molaren Menge der Speicherkomponenten, mit der das Trägermaterial beladen wird. Diese maximale Speicherkapazität kann um so besser ausgenutzt werden, je feiner die Speicherkomponenten auf dem Trägermaterial abgeschieden sind. Es ist daher empfehlenswert ein Trägermaterial mit einer hohen spezifischen Oberfläche zu wählen, auf der die Speicherkomponenten in hochdisperser Form abgeschieden werden können.

Für die Anwendung als Stickoxid-Speichermaterial sind Beladungen des Trägermaterials mit 10 bis 45, bevorzugt mit 20 bis 30 Gew.-%, der Speicherkomponenten, bezogen auf das Gesamtgewicht des Speichermaterials, wünschenswert. Das Trägermaterial eine spezifische Oberfläche von wenigstens 10 m$^2$/g, bevorzugt von mehr als 50 m$^2$/g (gemessen nach DIN 66132), aufweisen. Sein Gesamtporenvolumen aus Mesoporen (Porendurchmesser d = 2 bis 30 nm) und Makroporen (Porendurchmesser d: > 30 nm) sollte mehr als 0,1, bevorzugt mehr als 0,3 ml/g betragen.

Wie durch Untersuchungen mittels Röntgenbeugung festestellt wurde, zeigen die genannten Trägermaterialien nur eine geringe Neigung, mit den Speicherkomponenten zu reagieren. Darüber hinaus sind sie mit spezifischen Oberflächen von mehr als 10 m$^2$/g erhältlich, die auch eine genügende Stabilität unter den Abgasbedingungen von Magermotoren aufweisen. Dies gilt besonders für dotiertes Ceroxid, für Cer/Zirkon-Mischoxide und für Magnesiumoxid.

Die Größe der Frischoberflächen dieser Materialien hängt sehr von der Herstellungsweise der Materialien der thermischen Vorbehandlung und gegebenenfalls der Dotierung mit weiteren Elementen ab. Beispielsweise kann hochoberflächiges Magnesiumoxid aus der thermischen Zersetzung von Magnesiumcarbonat mit resultierenden Oberflächen von über 100 m$^2$/g oder auch als Sintermaterial mit Oberflächen von weniger als 2 m$^2$/g gewonnen werden.

Das Sintermaterial ist für die Zwecke der Erfindung ungeeignet.

Reines Ceroxid ist mit hohen spezifischen Oberflächen von mehr als 100 m$^2$/g erhältlich. Nach Calcinierung an Luft bei Temperaturen von 900°C für die Dauer von 10 Stunden weisen diese Materialien immer noch spezifische Oberflächen von mehr als 10 m$^2$/g auf. Calcinierung unter reduzierenden Bedingungen bei hohen Temperaturen, wie sie typischerweise im Hochlastbetrieb aller gängigen Otto- und Magermotoren auftreten, führen dagegen zu spezifischen Oberflächen unter 10 m$^2$/g. Reines Ceroxid ist somit als Trägermaterial für die Speicherkomponenten wenig geeignet.

Die spezifische Oberfläche von Ceroxid kann durch Dotieren mit einem Oxid der Elemente aus der Gruppe gebildet aus Silicium, Scandium, Yttrium und den Seltenerdmetallen (Lanthan, Praseodym, Neodym, Promethium, Samarium, Europium, Gadolinium, Terbium, Dysprosium, Holmium, Erbium, Thulium, Ytterbium und Luthetium) oder Mischungen ihrer Oxide auch gegenüber reduzierenden Abgasbedingungen stabilisiert werden. Hierzu sind 0,5 bis 20, bevorzugt 5 bis 10 Gew.-%, des jeweiligen Oxids oder der Oxidmischung notwendig. Die Konzentrationsangabe bezieht sich hierbei auf das Gesamtgewicht des Trägermaterials. Die Dotierung kann nach an sich bekannten Verfahren, wie zum Beispiel Co-Fällen, Co-Thermohydrolyse, Imprägnieren und Auffällen, erfolgen.

So kann dotiertes Ceroxid durch Co-Fällen aus einer wäßrigen Lösung von Vorläuferverbindungen des Ceroxids und des Dotierungsoxids erhalten werden. Beispielsweise kann mit Praseodym dotiertes Ceroxid dadurch hergestellt werden, daß eine wäßrige Lösung aus Cernitrat und Praseodymnitrat mit Ammoniumcarbonat oder Ammoniumoxalat versetzt wird, so daß Cer und Praseodym gemeinsam als Carbonate oder Oxalate ausfällen. Nach Abfiltrieren und Trocknen wird der Niederschlag durch Calcinieren in die entsprechenden Oxide überführt. Alternativ kann die Co-Fällung auch in einem basischen Medium ausgeführt werden.

Bei der Co-Thermohydrolyse wird einem Sol bestehend aus Cerhydroxynitrat und dem Hydroxynitrat des Dotierungselementes durch Wärmezufuhr das Wasser entzogen. Dadurch werden die Hydroxynitrate zu den entsprechenden Oxiden zersetzt. Die Co-Thermohydrolyse wird zum Beispiel in der WO 98/16472 beschrieben.

Zum Dotieren von Ceroxid durch Imprägnieren wird das als Pulvermaterial vorliegende Ceroxid mit einer wäßrigen Lösung von Vorläuferverbindungen der gewünschten Dotierungsoxide getränkt. Häufig wird hierbei die sogenannte Porenvolumenimprägnierung angewendet, bei der die Vorläuferverbindungen der Dotierungsoxide in einem Wasservolumen gelöst werden, welches dem Wasseraufnahmevermögen des Ceroxidpulvers entspricht.

Beim Dotieren von Ceroxid durch Auffällen wird das als Pulvermaterial vorliegende Ceroxid in einer wäßrigen Lösung der Vorläuferverbindungen der Dotierungselemente dispergiert. Durch langsame Zugabe einer Base werden die Speicherkomponenten in Form von Hydroxiden auf das Trägermaterial ausgefällt.

Von den besprochenen Verfahren werden bevorzugt das Co-Fällen und die Co-Thermohydrolyse eingesetzt, die eine sehr homogene Dotierung über den gesamten Querschnitt der Ceroxidpartikel ermöglichen.

Bei allen vier Verfahren werden die Vorläuferverbindungen beziehungsweise ihre schwer löslichen Niederschläge durch Calcinieren bei Temperaturen bis 800°C in die entsprechenden Oxide überführt.

Geeignete Trägermaterialien für die Speicherkomponenten sind auch Cer/Zirkon-Mischoxide, obwohl Zirkonoxid als alleiniges Trägermaterial unbrauchbar ist, da es zum Beispiel mit Bariumoxid zum Bariumzirkonat reagiert. Als Komponente eines Mischoxids mit Ceroxid ist diese Reaktion jedoch stark vermindert, da das Ceroxid das Zirkonoxid maskiert und somit eine Reaktion des Zirkonoxids mit dem Bariumoxid weitgehend unterbindet.

Cer/Zirkon-Mischoxide sind kommerziell mit einem weiten Mischungsverhältnis von Ceroxid zu Zirkonoxid erhältlich und finden ebenso wie reines Ceroxid weite Verbreitung als Sauerstoff-Speichermaterialien in konventionellen Dreiweg-Katalysatoren. Die Herstellung der Cer/Zirkon-Mischoxide kann zum Beispiel über mechanisches Mischen oder Imprägnierungs- und Co-Fällungstechniken erfolgen. Im Rahmen der vorliegenden Erfindung sind die hervorragenden Eigenschaften dieser Materialien als Trägermaterialien für die Speicherkomponenten wichtig. Ihre Sauerstoffspeicherfähigkeit ist von geringerer Bedeutung.

Besonders günstige Eigenschaften als Trägermaterialien für Speicherkomponenten weisen die Cer/Zirkon-Mischoxide dann auf, wenn der Gehalt des Mischoxides an Zirkonoxid, 20 Gew.-%, bezogen auf das Gesamtgewicht des Mischoxides, nicht übersteigt. Um dem Ceroxid eine ausreichende Stabilität gegenüber reduzierenden Abgasbedingungen zu verleihen, darf der Gehalt des Mischoxides an Zirkonoxid jedoch 1 Gew.-% nicht unterschreiten. Besonders vorteilhaft sind Zirkonoxidgehalte zwischen -5 und 15 Gew.-%. Sehr gute Ergebnisse konnten mit einem Gehalt von 10 Gew.-% Zirkonoxid erzielt werden. Oberhalb von 25 Gew.-% Zirkonoxid ist das Ceroxid nicht mehr in der Lage, das Zirkonoxid bei hohen Temperaturen vor einer Reaktion mit den Speicherkomponenten abzuschirmen. Ein Cer/Zirkon-Mischoxid mit 30 Gew.-% Zirkonoxid ist daher unter Betriebsbedingungen mit hohen Abgastemperaturen nicht mehr als Trägermaterial für die Speicherkomponenten geeignet.

Im eingangs zitierten Stand der Technik werden Seltenerdmetalloxide häufig auch als Stickoxid-Speicherkomponenten bezeichnet. Es wurde jedoch gefunden, daß in den erfindungsgemäßen Speichermaterialien das verwendete Ceroxid allenfalls einen geringen Bruchteil der Speicherkapazität der Speicherkomponenten aufweist, so daß die Einstufung des Ceroxids im Rahmen dieser Erfindung als Trägermaterial gerechtfertigt ist. Dies gilt auch unter Berücksichtigung der Tatsache, daß im erfindungsgemäßen Speichermaterial das Trägermaterial im hohen molaren Überschuß zur Speicherkomponente vorliegt.

Es können Molverhältnisse des Trägermaterials zur Speicherkomponente von 2:1 bis 25:1 angewendet werden. Größere Molverhältnisse als 25:1 sind nicht empfehlenswert, da dann die Speicherkapazität des Speichermaterials für technische Anwendungen zu gering wird. Unterhalb eines Verhältnisses von 2:1 läßt sich dagegen das Speichermaterial nicht mehr in ausreichend hochdisperser Form auf dem Trägermaterial abscheiden. Bevorzugt werden daher Molverhältnisse von 3,5:1 bis 6:1 eingesetzt.

Eine weitere Verbesserung der thermischen Oberflächenstabilität von Cer/Zirkon-Mischoxid kann wie beim reinen Ceroxid durch Dotieren mit einem Oxid der Elemente aus der Gruppe gebildet aus Silicium, Scandium, Yttrium und den Seltenerdmetallen (Lanthan, Cer, Praseodym, Neodym, Promethium, Samarium, Europium, Gadolinium, Terbium, Dysprosium, Holmium, Erbium, Thulium, Ytterbium und Luthetium) oder Mischungen ihrer Oxide erzielt werden. Hierzu sind 0,5 bis 20, bevorzugt 5 bis 10 Gew.-%, des jeweiligen Oxids oder der Oxidmischung notwendig. Die Konzentrationsangabe bezieht sich hierbei auf das Gesamtgewicht des Trägermaterials. Die Dotierung kann mit den schon im Falle des Dotierens von Ceroxid erläuterten Verfahren vorgenommen werden.

Die Trägermaterialien auf der Basis von Ceroxid sind besonders vorteilhaft für die Herstellung von Speichermaterialien, die in Schwefeldioxid enthaltenden Abgasen eingesetzt werden sollen. Schwefeldioxid reagiert nach Oxidation zu Schwefeltrioxid mit Bariumoxid in Konkurrenz zu Stickstoffdioxid zu Bariumsulfat. Bariumsulfat ist thermisch wesentlich stabiler als Bariumnitrat und vermindert somit kontinuierlich die Speicherkapazität des Speichermaterials. Das Speichermaterial muß daher von Zeit zu Zeit desulfatisiert werden. Hierzu wird der Motor mit einem unterstöchiometrischen Luft/Kraftstoff-Gemisch ($\lambda$<0,98) betrieben und die Abgastemperatur erhöht. Zur Desulfatisierung des konventionellen Speichermaterials Bariumoxid auf Aluminiumoxid ($BaO/Al_2O_3$) sind Temperaturen von mehr als 650°C notwendig. Es wurde nun gefunden, daß Ceroxid offensichtlich eine promotierende Wirkung auf die Desulfatisierung von Bariumoxid ausübt, wenn es als Trägermaterial für Bariumoxid verwendet wird und somit direkt mit dem gebildeten Bariumsulfat in Kontakt kommt. Die Desulfatisierung des erfindungsgemäßen Speichermaterials Bariumoxid auf Ceroxid ($BaO/CeO_2$) setzt schon bei nur 550°C ein. Dies ist wegen der damit verbundenen Kraftstoffeinsparung besonders vorteilhaft.

Zur Herstellung des erfindungsgemäßen Speichermaterials müssen die Speicherkomponenten in geeigneter Weise in das Trägermaterial ein- oder aufgebracht werden. Hier können die schon beim Dotieren von Ceroxid beschriebenen Techniken des Co-Fällens, der Co-Thermohydrolyse, des Imprägnierens und Auffällens angewendet werden. Bevorzugt erfolgt die Herstellung durch Imprägnieren des Trägermaterials mit löslichen Vorstufen der Speicherkomponenten und anschließendem Trocknen und Calcinieren bei Temperaturen von 300 bis 800°C, wobei die Vorstufen in die eigentlichen oxidischen Speicherkomponenten überführt werden. Nach Abkühlen auf Raumtemperatur reagieren die Speicherkomponenten mit dem Kohlendioxid- und Wassergehalt der Luft, so daß sie wie schon vorstehend beschrieben, zu einem gewissen Teil auch als Carbonat oder Hydroxid vorliegen.

Hierbei ist erfindungsgemäß darauf zu achten, daß die gewählte Materialpaarung Trägermaterial/Speicherkomponente nicht zur Bildung von Mischoxiden neigt. Dies gilt auch für die Verfahren des Co-Fällens und der Co-Thermohydrolyse. In diesen Fällen führt die mangelnde Neigung zur Bildung von Mischoxiden zur Ausbildung von Domänen im Speichermaterial, welche im wesentlichen aus dem Trägermaterial bestehen und Domänen, welche im wesentlichen von der Speicherkomponente gebildet werden.

Die Calcinierung des imprägnierten Trägermaterials ist ein wichtiger Schritt bei der Herstellung des Speichermaterials. Die Art der Calcinierung bestimmt unter anderem die Korngröße oder die Größe der oben besprochenen Domänen der sich bildenden Bariumoxid- beziehungsweise Bariumcarbonatpartikel. Diese Korngröße sollte unter 1,5, bevorzugt unter 1 μm liegen, um eine ausreichend hohe Oberfläche für die Wechselwirkung der Speicherkomponente mit dem Abgas zur Verfügung zu stellen. Die geringe Korngröße begünstigt auch ein gutes dynamisches Verhalten der Speicherung und Freisetzung von Stickoxiden und Schwefeloxiden, da nur kurze Diffusionswege von den Reaktanden in den Partikeln zurückzulegen sind, so daß die Speicherung der Stickoxide dem Wechsel in der Abgaszusammensetzung bei schnellen Lastwechseln des Verbrennungsmotors folgen kann.

Um die Korngröße der Speicherkomponenten nicht über die Obergrenze von 1 bis 1,5 μm anwachsen zu lassen, müssen die Temperatur und Dauer der Calcinierung in geeigneter Weise aufeinander abgestimmt werden. Korngrößen von weniger als 1 μm werden zum Beispiel bei einer Calciniertemperatur von 500°C über die Dauer von 2 Stunden erhalten. Zur Kontrolle der Korngrößen der Speicherkomponenten kann das Speichermaterial im Transmissionselektronenmikroskop oder mittels der Röntgenbeugung und Auswertung der Verbreiterung der Beugungsmaxima untersucht werden.

Als Vorstufen beziehungsweise Vorläuferverbindungen der Speicherkomponente werden wasserlösliche Verbindungen verwendet, wie zum Beispiel Acetate, Nitrate, Nitrite, Chloride, Hydroxide usw.. Bevorzugt werden Acetate verwendet, da es sich gezeigt hat, daß Acetate die Ausbildung kleiner Partikel der Speicherkomponenten begünstigen.

Die Dotierungselemente zur Stabilisierung des Trägermaterials können der Imprägnierlösung mit den Vorläuferverbindungen der Speicherkomponenten ebenfalls in Form löslicher Vorstufen zugesetzt werden, so daß das Dotieren mit den Dotierungselementen und das Belegen mit den Speicherkomponenten in einem Arbeitsgang vorgenommen werden.

Das Auffällen der Speicherkomponenten kann in der Weise geschehen, daß dem Trägermaterial eine Lösung von wasserlöslichen Verbindungen der Speicherkomponenten zugegeben wird und diese durch Zugabe eines Fällungsreagenzes auf dem Trägermaterial abgeschieden werden. Geeignete Fällungsreagenzien für die Anionen von Strontium und Barium finden sich in Form von Ammoniumcarbonat und Ammoniumoxalat.

Das Speichermaterial kann zur Anfertigung von Stickoxid-Speichern verwendet werden. Dabei handelt es sich um inerte Wabenkörper aus Metall oder Keramik, deren Strömungskanäle mit dem Speichermaterial beschichtet sind. Zur Beschichtung wird das pulverförmige Speichermaterial zu einer wäßrigen Beschichtungsdispersion verarbeitet und auf die Wabenkörper mit bekannten Beschichtungsverfahren aufgebracht, getrocknet und calciniert.

Bei der Herstellung solcher Stickoxid-Speicher kann das Speichermaterial auch in situ" hergestellt werden, das heißt das unbehandelte Trägermaterial wird zur Anfertigung einer wäßrigen Beschichtungsdispersion verwendet. Dieser Beschichtungsdispersion werden die Speicherkomponenten und stabilisierenden Komponenten in Form ihrer löslichen Vorstufen zugefügt. Mit dieser Beschichtungsdispersion werden dann die Wabenkörper beschichtet, die Beschichtung getrocknet und abschließend calciniert. Die Bildung des Speichermaterials erfolgt hier also erst in der Beschichtung auf dem Wabenkörper. Durch diese Vorgehensweise wird ein Calcinierschritt eingespart.

Alternativ kann auch eine Beschichtungsdispersion angefertigt werden, die nur das Trägermaterial enthält. Mit dieser Dispersion werden die Wabenkörper beschichtet, getrocknet und calciniert. Anschließend werden die beschichteten Wabenkörper durch Imprägnieren mit den löslichen Vorstufen der Speicherkomponenten und gegebenenfalls der Dotierungselemente belegt, getrocknet und calciniert. Auch in diesem Fall bildet sich das Speichermaterial erst in der Beschichtung des Wabenkörpers. Es lassen sich beliebige Kombinationen der beschriebenen Herstellverfahren denken.

Das erfindungsgemäße Speichermaterial läßt sich besonders vorteilhaft mit konventionellen Speichermaterialien kombinieren. So wird auch schon eine erhebliche Verbesserung der thermischen Stabilität des Stickoxid-Speichers erhalten, wenn das Speichermaterial zum Beispiel mit einem Material gemischt wird, welches eine Speicherkomponente auf einem bekannten Trägermaterial enthält, zum Beispiel Bariumoxid auf $\gamma$-Aluminiumoxid (aktives Aluminiumoxid). Die oben beschriebenen "in situ"-Herstellverfahren lassen sich auch auf ein solches gemischtes Speichermaterial in beliebiger Kombination anwenden.

Bevorzugt wird das erfindungsgemäße Speichermaterial zu Stickoxid-Speicherkatalysatoren verarbeitet, die aus einem inerten Wabenkörper bestehen, deren Strömungskanäle mit dem Katalysatormaterial beschichtet sind. Das Katalysatormaterial besteht aus dem Speichermaterial und katalytisch aktiven Metallkomponenten. Die katalytisch aktiven Komponenten können auf dem Speichermaterial selber vorliegen oder auf einem separaten Trägermaterial, bevorzugt Aluminiumoxid. Vorteilhafterweise wird hierzu ein stabilisiertes Aluminiumoxid verwendet. Zur Stabilisierung des Aluminiumoxids wird es häufig mit Lanthan oder Barium dotiert. Solche Materialien sind kommerziell erhältlich.

Auch bei der Herstellung des Stickoxid-Speicherkatalysators können verschieden in situ"-Techniken angewendet werden, bei denen sich das Speichermaterial erst bei der abschließenden Calcinierung des beschichteten Wabenkörpers bildet.

Einige der besprochenen Herstellverfahren werden in den folgenden Beispielen und Vergleichsbeispielen vorgestellt. Es zeigen

Figur 1: Schematische Darstellung der $NO_x$-Konzentrationen vor und hinter dem Stickoxid-Speicher zur Bestimmung des Speicherwirkungsgrades

Figur 2 bis 18: Stickoxid-Speicherwirkungsgrade der Speicher-Katalysatoren einiger Beispiele und Vergleichsbeispiele in Abhängigkeit von der Abgastemperatur; jeweils für frische und am Motor gealterte Katalysatoren.

**Vorversuch:**

Es wurden verschiedene Trägermaterialien bezüglich ihrer Neigung zur Reaktion mit Stickoxid-Speicherkomponenten bei Calcinierung für die Dauer von 24 Stunden bei 850°C an Luft untersucht.

Als Stickoxid-Speicherkomponenten wurden Kaliumoxid und Bariumoxid ausgewählt und jeweils durch Imprägnieren auf den Trägermaterialien abgeschieden. Auf jeweils 100 g Trägermaterial wurden 20 g Bariumoxid oder 20 g Kaliumoxid aufgebracht.

Die calcinierten Speichermaterialien wurden mit Hilfe von Röntgenbeugung (XRD) auf die vermutete Bildung von Mischoxiden aus dem jeweiligen Tägermaterial und den Speicherkomponenten untersucht. Die Ergebnisse sind in der Tabelle 1 aufgelistet.

Tabelle 1 enthält neben dem Namen des untersuchten Trägermaterials seine BET-Oberfläche im Frischzustand und seine Zusammensetzung. In der Spalte Mischoxid" ist das sich möglicherweise bildende Mischoxid angegeben. Die Spalten "stärkster Reflex" und "zweitstärkster Reflex" enthalten die Beugungswinkel für die beiden signifikantesten Reflexe des sich möglicherweise bildenden Mischoxids. Die Intensitäten der Reflexe sind in den jeweils benachbarten Spalten qualitativ angegeben. Für die Zwecke der Erfindung sind Trägermaterialien geeignet, die nur eine geringe Neigung zur Reaktion mit den Speicherkomponenten zeigen. Dies ist der Fall, wenn die Reflexe entweder nicht nachweisbar sind oder nur eine Intensität von schwach" bis mittel" aufweisen. Einen Sonderfall stellt das Bariumtitanat dar, welches schon von sich aus ein Mischoxid zwischen Bariumoxid und Titanoxid ist und daher durch die Calcinierung keine Veränderung erfährt.

Wie aus Tabelle 1 ersichtlich ist, zeigen die konventionellen Trägermaterialien Zirkonoxid, Titanoxid, Aluminiumoxid und Magnesium/Aluminium-Spinell ($MgAl_2O_4$) unter den gewählten Alterungsbedingungen eine starke Mischoxidbildung mit Bariumoxid und Kaliumoxid. Magnesiumoxid bildet kein Mischoxid mit Bariumoxid. Im Falle des Ceroxids konnte die Bildung des theoretisch möglichen Bariumcerats ($BaCeO_3$) nicht beobachtet werden. Die Cer/Zirkon-Mischoxide wiesen bei steigendem Zirkonoxidgehalt eine Neigung zur Bildung von Bariumzirkonat auf. Bis zu einem Gehalt von etwa 30 Gew.-% Zirkonoxid im Cer/Zirkon-Mischoxid ist die Mischoxidbildung jedoch noch tolerierbar. Zirkonsilicat zeigt ebenfalls keine Reaktion mit den Speicherkomponenten.

Erfindungsgemäß sollte ein geeignetes Trägermaterial für Stickoxid-Speicherkomponenten nur eine geringe Neigung zur Mischoxidbildung mit den Speicherkomponenten zeigen, eine genügende Stabilität seiner spezifischen Oberfläche gegenüber den reduzierenden und oxidierenden Abgasbedingungen eines Verbrennungsmotors aufweisen und außerdem eine spezifische Oberfläche von mehr als 10 $m^2$/g besitzen.

Obwohl Ceroxid die erste und dritte Bedingung voll erfüllt, ist es als Trägermaterial für die Speicherkomponenten nur wenig geeignet, da seine spezifische Oberfläche unter reduzierenden Abgasbedingungen, wie sie in Hochlastbereichen von mager betriebenen Ottomotoren auftreten, nur eine geringe Stabilität aufweist. Im Falle von Zirkonsilicat tritt zwar keine Mischoxidbildung mit den Speicherkomponenten auf, seine spezifische Oberfläche im Frischzustand ist jedoch zu gering für die Aufnahme einer ausreichenden Menge der Speicherkomponenten in hochdisperser Form. Diese Aussage gilt für die verwendete Modifikation von Zirkonsilicat. Durch ein speziell ausgelegtes Herstellverfahren für Zirkonsilicat könnte es möglich sein, dieses Material auch mit einer größeren Frischoberfläche herzustellen. In diesem Fall wäre es ebenfalls als Trägermaterial für das erfindungsgemäße Speichermaterial geeignet.

**Tabelle 1:** Untersuchte Trägermaterialien und ihre Neigung zur Bildung von Mischoxiden mit den Speicherkomponenten

| Trägermaterial | BET-Oberfläche [m²/g] | Zusammensetzung [Gew.-%] | Mischoxid | stärkster Reflex 2 theta | Intensität des stärksten Reflexes | zweit-stärkster Reflex 2 theta | Intensität des zweitstärksten Reflexes |
|---|---|---|---|---|---|---|---|
| Magnesiumoxid | 59 | >99 MgO | --- | --- | --- | --- | --- |
| Ceroxid | 184 | >99 CeO₂ | BaCeO₃<br>K₂CeO₃ | 28,59<br>29,76 | nicht nachweisbar<br>nicht nachweisbar | 41,09<br>34,48 | nicht nachweisbar<br>nicht nachweisbar |
| Cer/Siliciumoxid | 220 | 99 CeO₂/1 SiO₂ | BaCeO₃<br>K₂CeO₃ | 28,59<br>29,76 | nicht nachweisbar<br>nicht nachweisbar | 41,09<br>34,48 | nicht nachweisbar<br>nicht nachweisbar |
| Cer/Zirkonoxid | 87 | 90 CeO₂/10 ZrO₂ | BaZrO₃ | 30,12 | schwach | 53,49 | schwach |
| Cer/Zirkonoxid | 152 | 70 CeO₂/30 ZrO₂ | BaZrO₃ | 30,12 | mittel | 53,49 | mittel |
| Cer/Zirkonoxid | 128 | 93 CeO₂/ 7 ZrO₂ | BaZrO₃ | 30,12 | schwach | 53,49 | schwach |
| Zirkonsilicat | 4 | >99 ZrSiO₄ | BaZrO₃ | 30,12 | schwach | 53,49 | schwach |
| Yttriumoxid | 14 | >99 Y₂O₃ | --- | --- | --- | --- | --- |
| Cer/Praseodymoxid | 151 | 88 CeO₂/12 Pr₆O₁₁ | BaCeO₃ | 28,59 | schwach | 41,09 | schwach |
| Cer/Neodymoxid | 162 | 91 CeO₂/ 9 Nd₂O₃ | BaCeO₃ | 28,59 | schwach | 41,09 | schwach |
| Bariumtitanat | 24 | >99 BaTiO₃ | BaTiO₃ | 31,57 | keine Veränderung | 38,89 | keine Veränderung |
| Zirkonoxid | 33 | >98 ZrO₂ | BaZrO₃<br>K₄Zr₁₁O₂₄ | 30,12<br>31,21 | stark<br>stark | 53,49<br>44,32 | stark<br>stark |
| Titanoxid | 78 | >98 TiO₂ | BaTiO₃<br>K₂Ti₆O₁₃ | 31,57<br>11,48 | stark<br>stark | 38,89<br>29,26 | stark<br>stark |
| Aluminiumoxid | 189 | >98 Al₂O₃ | BaAl₂O₄ | 28,28 | stark | 34,32 | mittel |
| Aluminiumsilicat | 300 | 95 Al₂O₃/5 SiO₂ | BaAl₂O₄ | 28,28 | stark | 34,32 | mittel |
| Mg-Spinell | 142 | 31 MgO/69 Al₂O₃ | BaAl₂O₄ | 28,28 | stark | 34,32 | stark |

EP 0 982 066 B1

**NO$_x$-Speicherkatalysatoren und ihr NO$_x$-Speicherwirkungsgrad:**

In den folgenden Beispielen wurden verschiedene Stickoxid-Speicherkatalysatoren unter Verwendung des erfindungsgemäßen Speichermaterials hergestellt und bezüglich ihres Stickoxid-Speicherwirkungsgrades mit nicht erfindungsgemäßen Speicherkatalysatoren verglichen.

Der Speicherwirkungsgrad wurde für frische und gealterte Katalysatoren ermittelt. Bei der Herstellung der Katalysatoren wurden in einigen Fällen die Edelmetallkomponente und die Speicherkomponenten auf separaten Trägerpartikeln abgeschieden und so in die Katalysatorformulierung eingebracht. In anderen Fällen wurden Edelmetall und Speicherkomponenten auf denselben Trägerpartikeln abgeschieden und standen somit unmittelbar miteinander in Kontakt. Die Untersuchungen zeigen, daß die Vorteile der erfindungsgemäßen Speichermaterialien in beiden Fällen zum Tragen kommen und nicht etwa von der Positionierung des Edelmetalls relativ zu den Speicherkomponenten abhängen.

Die Alterung der Stickoxid-Speicherkatalysatoren erfolgte am Motorprüfstand an einem Motor mit 2 Liter Hubraum über jeweils 50 Stunden. Die maximale Temperatur am Eingang der Katalysatoren wurde auf 750°C eingestellt. Aufgrund der exothermen Reaktionen am jeweiligen Katalysator erhöhte sich die Bettemperatur der Katalysatoren auf etwa 830°C. Die Alterung erfolgte unter reduzierenden Abgasbedingungen bei einer Luftzahl λ=0,97 mit periodischen Schubabschaltungen alle 120 Sekunden für jeweils 5 Sekunden. Während der Schubabschaltungen wechselte die Luftzahl schlagartig von 0,97 auf einen deutlich über 1 liegenden Wert.

Der Stickoxid-Speicherwirkungsgrad der Katalysatoren wurde an einer Synthesegasanlage ermittelt. Hierzu wurden die Speicherkatalysatoren mit einem sogenannten Fett/Mager-Zyklus betrieben, bei dem die Katalysatoren periodisch magerem und dann fettem Abgas bei einer definierten Temperatur ausgesetzt wurden. Magere Abgaszusammensetzungen wurden durch Zuschaltung einer hohen Sauerstoffkonzentration bei gleichzeitiger Abschaltung von Kohlenmonoxid und Wasserstoff eingestellt. Fette Abgaszusammensetzungen wurden durch die umgekehrte Vorgehensweise erzeugt.

Innerhalb der Magerphase wurden die Stickoxide vom jeweiligen Katalysator gespeichert. Während der Fettphasen erfolgten Desorption und Umsetzung der Stickoxide am Katalysator zu Stickstoff unter Verbrauch der reduktiven Komponenten Kohlenmonoxid, Wasserstoff und Kohlenwasserstoffe des Abgases.

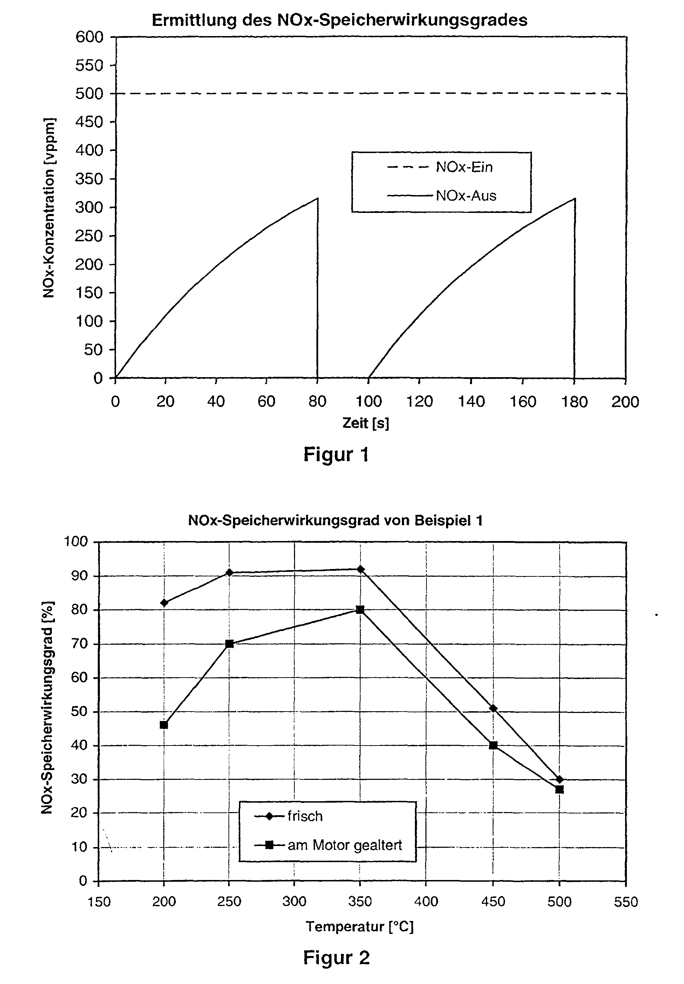

Figur 1 zeigt diese Verhältnisse in idealisierter Weise. Während der Messungen weist das Abgas eine konstante Konzentration von 500 vppm (Volumen ppm) an Stickstoffmonoxid (NO) auf. Die in den Speicherkatalysator eintretende Stickoxidkonzentration (NO$_x$Ein) wird daher durch die gestrichelte Gerade in Figur 1 wiedergegeben. Die Stickoxidkonzentration hinter dem Speicherkatalysator (NO$_x$Aus) ist zunächst Null, da der frische Speicherkatalysator im Idealfall alle im Abgas enthaltenen Stickoxide bindet. Mit zunehmender Zeit wird der Speicherkatalysator mit Stickoxiden beladen und seine Speicherkapazität verringert sich. Dadurch werden zunehmend weniger Stickoxide am Speicherkatalysator gebunden, so daß hinter dem Katalysator eine ansteigende Stickoxidkonzentration meßbar wird, die nach vollständiger Absättigung des Speicherkatalysators mit Stickoxiden sich der Eingangskonzentration angleichen würde. Daher muß nach einer gewissen Zeit (in Figur 1 nach 80 Sekunden) die Regeneration des Speicherkatalysators eingeleitet werden. Dies geschieht durch Anfetten des Abgases für die Dauer von etwa 20 Sekunden. Hierdurch werden die gespeicherten Stickoxide desorbiert und im Idealfall am Speicherkatalysator vollständig umgesetzt, so daß während der Regenerationszeit keine Stickoxide hinter dem Speicherkatalysator meßbar sind. Danach wird wieder auf mageres Abgas umgeschaltet und die Einspeicherung von Stickoxiden beginnt von neuem.

Der momentane Speicherwirkungsgrad des Speicherkatalysators ist definiert als das Verhältnis

$$\frac{NO_xEin\text{-}NO_xAus}{NO_xEin}.$$

Wie aus Figur 1 ersichtlich ist, ist dieser Wirkungsgrad zeitabhängig. Zur Beurteilung der Speicherkatalysatoren wurde daher der über die jeweilige Speicherphase integrierte und über acht aufeinanderfolgende Speicherzyklen gemittelte Speicherwirkungsgrad S bestimmt:

$$S = \frac{1}{8}\sum_{1}^{8}\int_{t=0}^{80}\frac{NO_xEin - NO_xAus}{NO_xEin}dt \times 100 \ [\%].$$

Der Speicherwirkungsgrad S ist somit keine Materialkonstante, sondern von den Parametern des gewählten Fett/Mager-Zyklusses abhängig. Für die Beurteilung der hergestellten Speicherkatalysatoren wurden die folgenden Bedingungen gewählt:

**Parameter des Fett/Mager-Zyklus**

Raumgeschwindigkeit: 50.000 h$^{-1}$
Temperaturbereich: 150 - 500°C in Stufen von 50°C
Anzahl der Fett/Mager-Zyklen: 8 pro Temperaturstufe
Dauer der Magerphase: 80 Sekunden
Dauer der Fettphase: 20 Sekunden

**Abgaszusammensetzung**

| während der Magerphase | | während der Fettphase | |
|---|---|---|---|
| Gaskomponente | Konzentration | Gaskomponente | Konzentration |
| NO | 500 vppm | NO | 500 vppm |
| $CO_2$ | 10,0 Vol.-% | $CO_2$ | 10,0 Vol.-% |
| $H_2O$ | 10,0 Vol.-% | $H_2O$ | 10,0 Vol.-% |
| $C_3H_6$ | 50 vppm | $C_3H_6$ | 50 vppm |
| $O_2$ | 8,0 Vol.-% | $O_2$ | 0,2 Vol.-% |
| CO | 0,0 Vol.-% | CO | 4,0 Vol.-% |
| $H_2$ | 0,0 Vol.-% | $H_2$ | 1,3 Vol.-% |

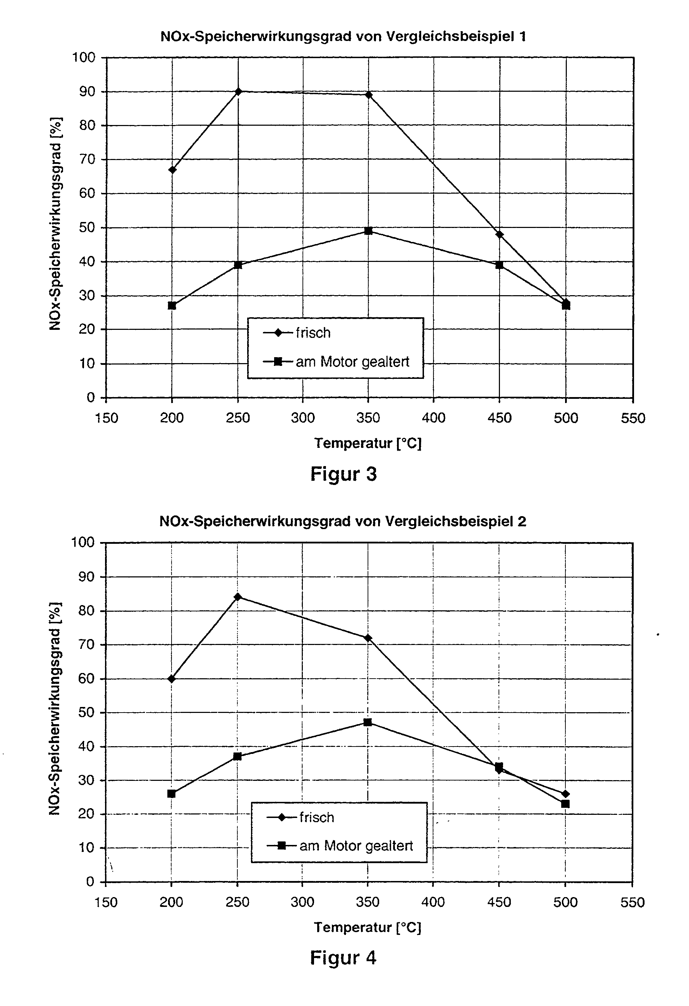

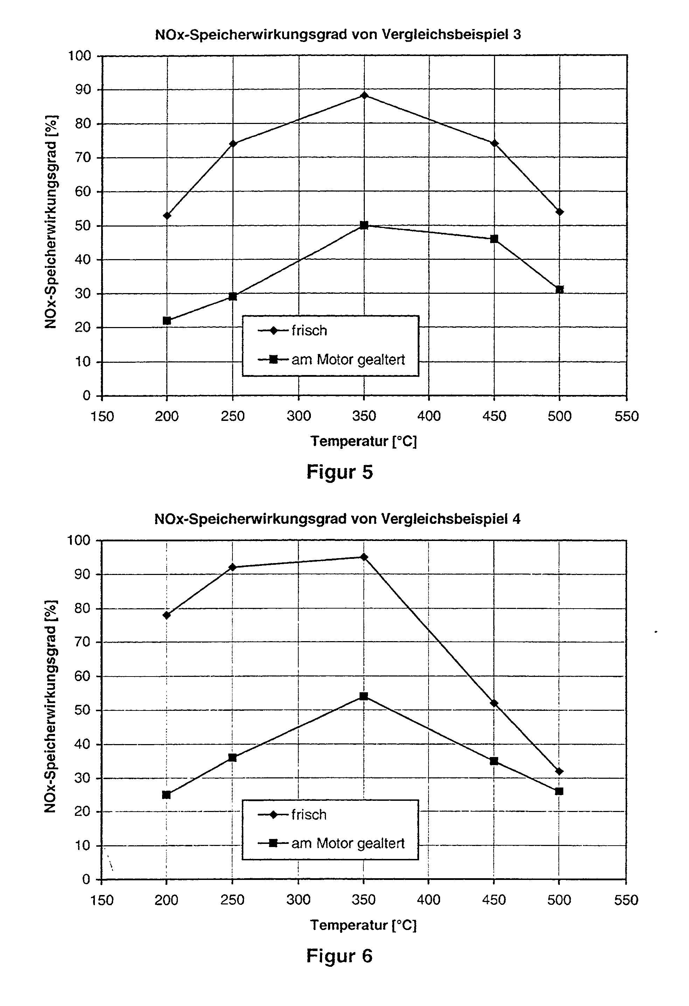

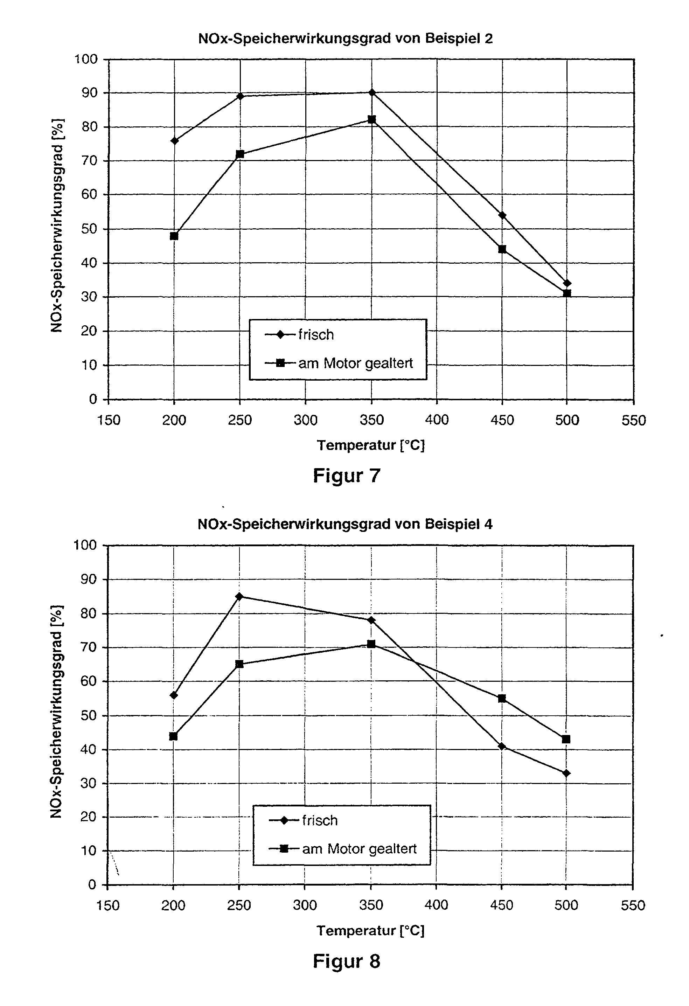

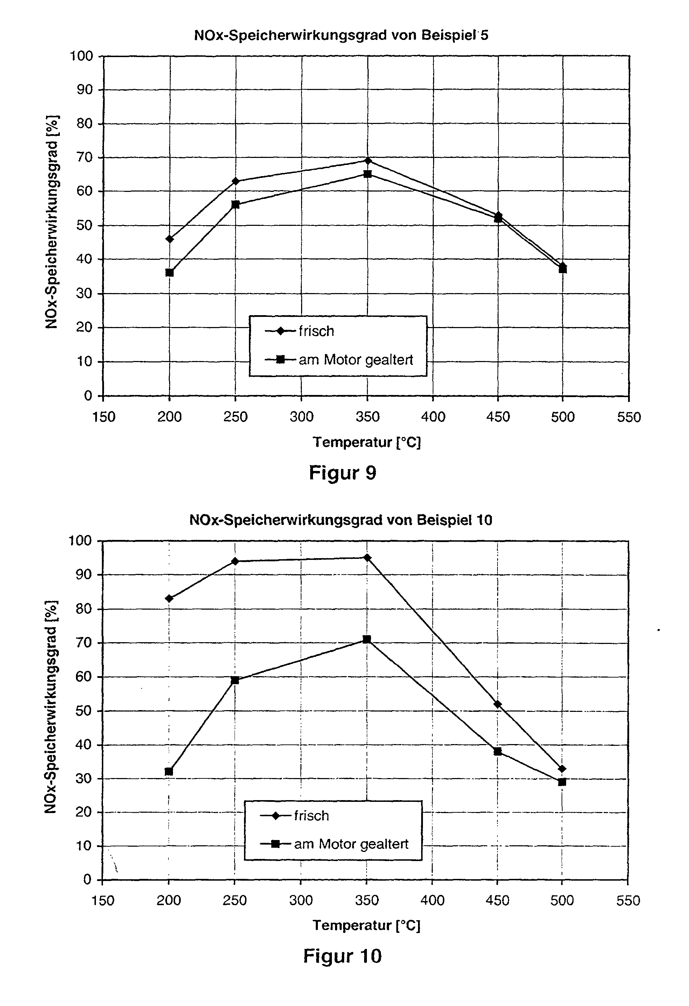

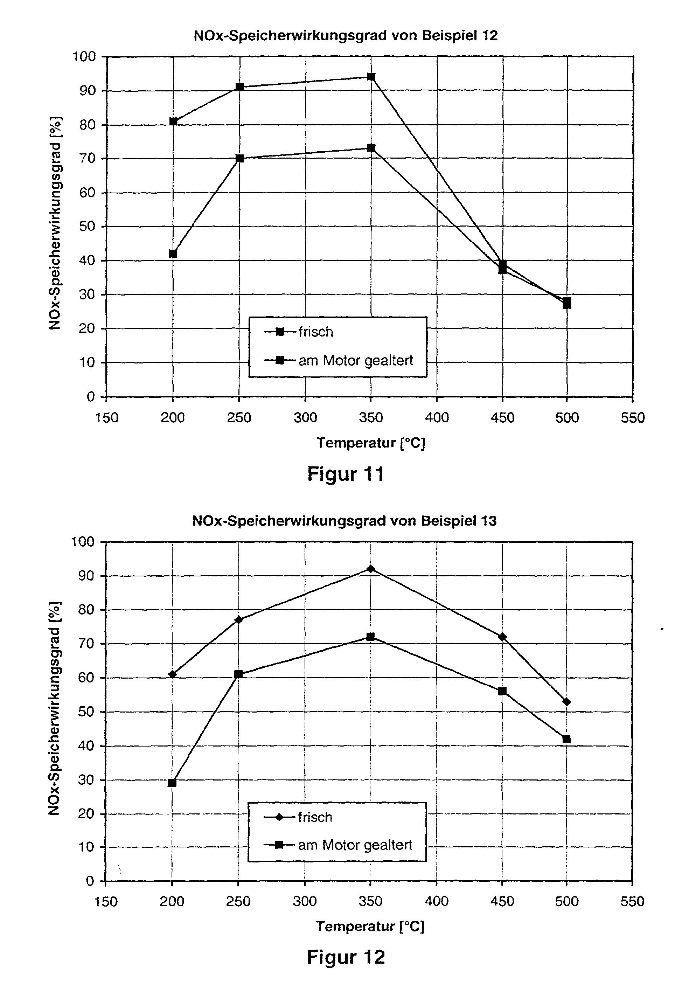

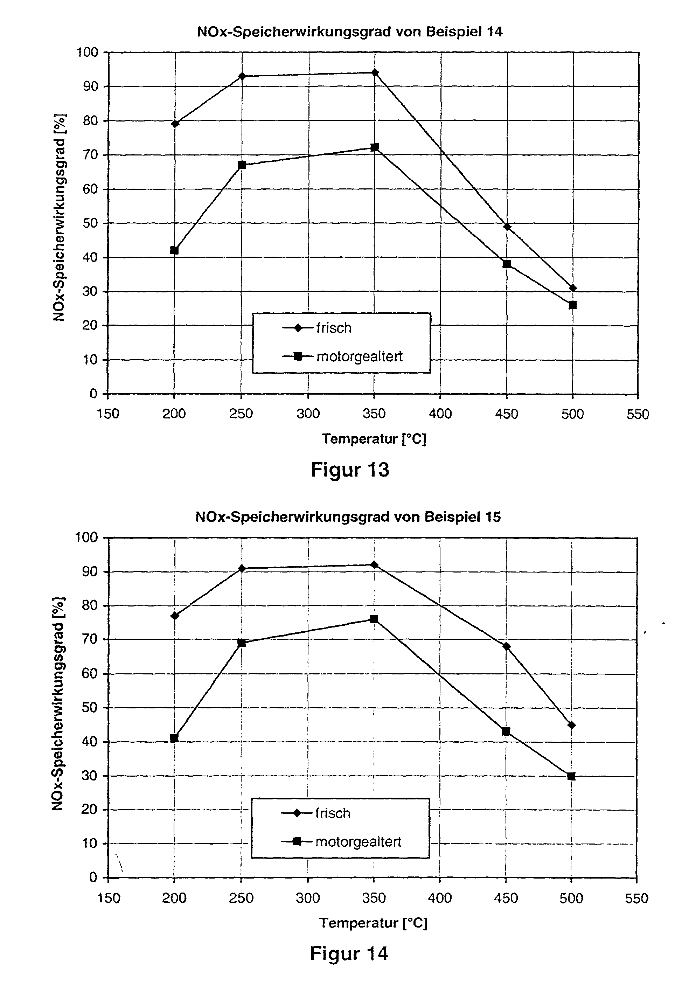

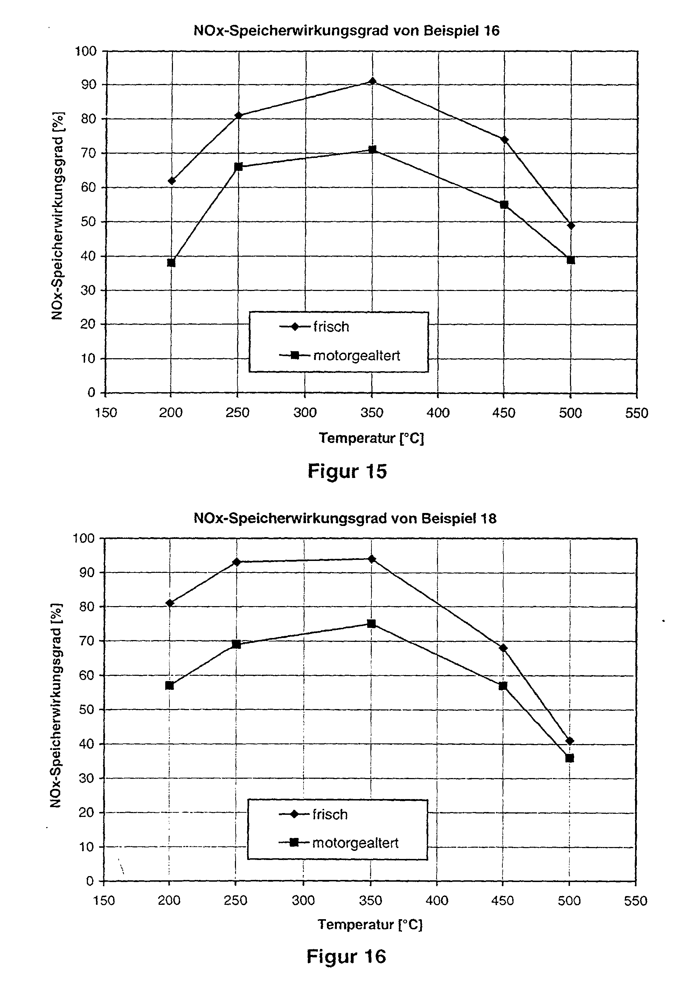

In den Figuren 2 bis 16 sind die auf diese Weise ermittelten Speicherwirkungsgrad für verschieden Speicherkatalysatoren in Abhängigkeit von der Abgastemperatur aufgetragen.

**Beispiel 1:**

In diesem Beispiel wurden zur Herstellung eines Stickoxid-Speicherkatalysators zunächst ein erfindungsgemäßes Stickoxid-Speichermaterial und zwei Katalysatorpulver angefertigt. Die drei Pulvermaterialien wurden dann zu einem Katalysator verarbeitet.

Zur Herstellung des Speichermaterials wurden 550 g eines Cer/Zirkon-Mischoxides (90 Gew.-% Ceroxid und 10 Gew.-% Zirkonoxid) mit einer BET-Oberfläche im calcinierten Frischzustand von 87 m$^2$/g durch Imprägnieren mit wäßriger Bariumacetatlösung, anschließendem Trocknen und Calcinieren bei 500°C an Luft mit 100 g Bariumoxid belegt. Die Dauer der Calcinierung betrug zwei Stunden. Durch das Calcinieren wurde das lösliche Bariumacetat auf dem Trägermaterial in Form von Bariumoxid beziehungsweise Bariumcarbonat fixiert. Hierdurch wurde sichergestellt, daß das Bariumacetat bei den folgenden Herstellschritten nicht wieder in Lösung geht.

Die Größe der gebildeten Bariumoxid- beziehungsweise Bariumcarbonatpartikel auf den Ceroxidpartikeln wurde mit Hilfe eines Transmissionselektronenmikroskops vermessen. Der mittlere Durchmesser der Partikel betrug weniger als 1 μm.

Zur Anfertigung eines Platin/Aluminiumoxid-Pulvers wurden 15 g Platin auf 700 g Aluminiumoxid mit einer BET-Oberfläche im calcinierten Frischzustand von 210 m$^2$/g durch Imprägnieren mit einer wäßrigen Lösung von Platintetraamminnitrat sowie anschließendem Trocknen und Calcinieren bei 500°C an Luft abgeschieden.

Zur Anfertigung eines Rhodium/Aluminiumoxid-Pulvers wurden 1,5 g Rhodium auf 100 g Aluminiumoxid mit einer BET-Oberfläche im calcinierten Frischzustand von 142 m$^2$/g durch Imprägnieren mit einer wäßrigen Rhodiumnitratlösung sowie anschließendem Trocknen und Calcinieren bei 500°C abgeschieden.

Die drei auf diese Weise hergestellten Pulver wurden zu einer wäßrigen Dispersion angerührt und auf eine Partikelgröße von 3-5 μm ($d_{50}$) gemahlen. Die oxidischen Feststoffanteile der Dispersion wurden mittels eines Tauchverfahrens auf handelsübliche Wabenkörper aus Cordierit aufgebracht.

Die auf diese Weise beschichteten Wabenkörper wurden bei 120°C im Trockenschrank getrocknet. Tauch- und Trockenschritte wurden so lange wiederholt, bis eine Beladung von 230 g an oxidischen Anteilen pro Liter Wabenkörpervolumen erreicht war. Anschließend erfolgte eine 4-stündige Calcinierung der beschichteten Wabenkörper bei 500°C. Der fertige Katalysator enthielt somit 15,9 g/l Bariumoxid, 87,2 g/l Cer/Zirkon-Mischoxid, 126,9 g/l Aluminiumoxid, 2,4 g/l Platin und 0,24 g/l Rhodium.

### Vergleichsbeispiel 1:

Es wurde ein Katalysator analog zu Beispiel 1 angefertigt, jedoch wurde Bariumoxid nicht auf dem in Beispiel 1 verwendeten Cer/Zirkon-Mischoxid (mit 90 Gew.-% $CeO_2$) sondern auf $\gamma$-Aluminiumoxid mit einer BET-Oberfläche von 142 m$^2$/g aufgebracht.

### Vergleichsbeispiel 2:

Es wurde ein weiterer Katalysator analog zu Beispiel 1 angefertigt, jedoch wurde Bariumoxid nicht auf dem in Beispiel 1 verwendeten Cer/Zirkon-Mischoxid (mit 90 Gew.-% $CeO_2$) sondern auf Titanoxid mit einer BET-Oberfläche von 78 m$^2$/g aufgebracht.

### Vergleichsbeispiel 3:

Es wurde ein weiterer Katalysator analog zu Beispiel 1 angefertigt, jedoch wurde Bariumoxid nicht auf dem in Beispiel 1 verwendeten Cer/Zirkon-Mischoxid (mit 90 Gew.-% $CeO_2$) sondern auf einem Cer/Zirkon-Mischoxid mit 30 Gew.-% Zirkonoxid und einer BET-Oberfläche von 152 m$^2$/g aufgebracht.

### Vergleichsbeispiel 4:

Es wurde ein weiterer Katalysator analog zu Beispiel 1 angefertigt, jedoch wurde Bariumoxid nicht auf dem in Beispiel 1 verwendeten Cer/Zirkon-Mischoxid (mit 90 Gew.-% $CeO_2$) sondern auf einem reinen Ceroxid mit einer BET-Oberfläche von 184 m$^2$/g aufgebracht.

### Beispiel 2:

Ein Katalysator von Beispiel 1 wurde durch Imprägnieren mit einer wäßrigen Lösung von Praseodymacetat, Trocknen und anschließendem Calcinieren mit zusätzlich 15 g Praseodymoxid pro Liter Wabenkörpervolumen beladen.

### Beispiel 3:

Ein weiterer Katalysator von Beispiel 1 wurde durch Imprägnieren mit einer wäßrigen Lösung von Neodymnitrat, Trocknen und anschließendem Calcinieren mit zusätzlich 15 g Neodymoxid pro Liter Wabenkörpervolumen beladen.

### Beispiel 4:

Anstelle des in Beispiel 1 eingesetzten Cer/Zirkon-Mischoxides wurde Magnesiumoxid mit einer BET-Oberfläche von 59 m$^2$/g eingesetzt.

### Beispiel 5:

Ein Katalysator von Beispiel 4 wurde durch Imprägnieren mit einer wäßrigen Lösung von Bariumacetat, Trocknen und anschließendem Calcinieren mit weiteren 8 g Bariumoxid pro Liter Wabenkörpervolumen beladen.

### Beispiel 6:

Es wurde ein erfindungsgemäßes Speichermaterial durch Co-Fällung von Magnesiumoxid als Trägermaterial und Bariumoxid als Speicherkomponente auf folgende Weise gewonnen:

Eine wäßrige Lösung aus $MgCl_2$ (13,8 mol) und $BaCl_2$ (0,65 mol) wurde aus einer Bürette in 9,8 Liter einer Ammoniak-Lösung getropft. Die Ammoniak-Lösung wurde hierbei stark gerührt und auf einem konstanten pH-Wert von 11,0 und einer Temperatur von 60°C gehalten. Der sich bildende Niederschlag wurde abfiltriert, in demineralisiertem Wasser gewaschen, bei 120°C in Luft getrocknet und bei 600°C 4 Stunden lang calciniert.

Das so erhaltene BaO/MgO-Pulver wurde in gleicher Weise wie das in Beispiel 1 hergestellte Speichermaterial (Bariumoxid auf Cer/Zirkon-Mischoxid) in eine komplette Katalysatorformulierung eingearbeitet.

**Beispiel 7:**

Es wurde ein weiteres erfindungsgemäßes Speichermaterial durch Co-Fällung von Magnesiumoxid als Trägermaterial und Bariumoxid als Speicherkomponente auf folgende Weise gewonnen:

Eine wäßrige Lösung aus $MgCl_2$ (13,8 mol) und $BaCl_2$ (0,65 mol) wurde aus einer Bürette in 9,8 Liter einer 1,5 molaren Natriumcarbonat-Lösung getropft. Die Natriumcarbonat-Lösung wurde dabei stark gerührt und bei 60°C auf konstanter Temperatur gehalten. Der sich bildende Niederschlag wurde abfiltriert, in demineralisiertem Wasser gewaschen, bei 120°C in Luft getrocknet und bei 600°C 4 Stunden lang calciniert.

Das so erhaltene BaO/MgO-Pulver wurde in gleicher Weise wie das in Beispiel 1 hergestellte Speichermaterial (Bariumoxid auf Cer/Zirkon-Mischoxid) in eine komplette Katalysatorformulierung eingearbeitet.

**Beispiel 8:**

Es wurde ein weiteres erfindungsgemäßes Speichermaterial durch Co-Fällung von Praseodymoxid als Trägermaterial und Bariumoxid als Speicherkomponente auf folgende Weise gewonnen:

Eine wäßrige Lösung aus $Pr(NO_3)_3$ (3,2 mol) und $Ba(NO_3)_2$ (0,65 mol) wurde aus einer Bürette in 19,2 Liter einer 0,5 molaren $(NH_4)_2C_2O_4$-Lösung getropft. Die $(NH_4)_2C_2O_4$-Lösung wurde hierbei stark gerührt und bei 60°C auf konstanter Temperatur gehalten. Der pH-Wert wurde durch gleichzeitige Zugabe einer wäßrigen Ammoniak-Lösung auf 6,6 gehalten. Der sich bildende Niederschlag wurde abfiltriert, in demineralisiertem Wasser gewaschen, bei 120°C in Luft getrocknet und bei 600°C 4 Stunden lang calciniert.

Das so erhaltene $BaO/Pr_6O_{11}$-Pulver wurde in gleicher Weise wie das in Beispiel 1 hergestellte Speichermaterial (Bariumoxid auf Cer/Zirkon-Mischoxid) in eine komplette Katalysatorformulierung eingearbeitet.

**Beispiel 9:**

Es wurde ein weiteres erfindungsgemäßes Speichermaterial durch Co-Fällung von Ceroxid und Praseodymoxid als Trägermaterial und Bariumoxid als Speicherkomponente auf folgende Weise gewonnen:

Eine wäßrige Lösung aus $Ce(NO_3)_4$ (2,8 mol), $Pr(NO_3)_3$ (0,4 mol) und $Ba(NO_3)_2$ (0,65 mol) wurde aus einer Bürette in 19,2 Liter einer 0,5 molaren $(NH_4)_2C_2O_4$-Lösung getropft. Die $(NH_4)_2C_2O_4$-Lösung wurde hierbei stark gerührt und bei 60°C auf konstanter Temperatur gehalten. Der pH-Wert wurde durch gleichzeitige Zugabe einer wäßrigen Ammoniak-Lösung auf 6,6 gehalten. Der Niederschlag wurde abfiltriert, in demineralisiertem Wasser gewaschen, bei 120°C in Luft getrocknet und bei 600°C 4 Stunden lang kalziniert.

Das so erhaltene $BaO/CeO_x/PrO_y$-Pulver wurde in gleicher Weise wie das in Beispiel 1 hergestellte Speichermaterial (Bariumoxid auf Cer/Zirkon-Mischoxid) in eine komplette Katalysatorformulierung eingearbeitet.

**Beispiel 10:**

Anstelle des in Beispiel 1 eingesetzten Cer/Zirkon-Mischoxids wurde ein über Auffällung mit 12 Gew.-% Praseodymoxid stabilisiertes Ceroxid verwendet. Das stabilisierte Ceroxid hatte eine BET-Oberfläche von 151 $m^2$/g.

**Beispiel 11:**

Anstelle des in Beispiel 1 eingesetzten Cer/Zirkon-Mischoxids wurde ein über Auffällung mit 9 Gew.-% Neodymoxid stabilisiertes Ceroxid verwendet. Das stabilisierte Ceroxid hatte eine BET-Oberfläche von 162 $m^2$/g.

**Beispiel 12:**

Als Trägermaterial für die Speicherkomponente wurde das in Beispiel 10 hergestellte, mit Praseodymoxid stabilisierte Ceroxid eingesetzt. Anders als in Beispiel 10 wurde das stabilisierte Ceroxid nicht mit Bariumoxid sondern mit der gleichen Masse Strontiumoxid als Speicherkomponente imprägniert.

**Beispiel 13:**

Der fertige Katalysator aus Beispiel 10 wurde durch Imprägnieren mit einer wäßrigen Lösung von Bariumacetat, Trocknen und anschließendem Calcinieren mit weiteren 8 g Bariumoxid pro Liter Wabenkörpervolumen beladen.

**Beispiel 14:**

Anstelle des in Beispiel 1 eingesetzten Cer/Zirkonmischoxids wurde ein mit 1 Gew.-% Siliziumoxid stabilisiertes Ceroxid mit einer BET-Oberfläche von 219 m$^2$/g eingesetzt.

**Beispiel 15:**

Das NO$_x$-Speichermaterial wurde zunächst wie in Beispiel 14 hergestellt. Zusätzlich wurden jedoch weitere 6 Gew.-% Calciumoxid durch Nachimprägnieren mit wäßriger Calciumnitratlösung, Trocknen und Calcinieren auf das mit Siliziumoxid stabilisierte Ceroxid aufgebracht.

**Beispiel 16:**

Der Katalysator wurde entsprechend den Mengenangaben aus Beispiel 1 angefertigt, jedoch wurde die Herstellung modifiziert. Zunächst wurde eine Dispersion der drei in Beispiel 1 beschriebenen Pulver, nämlich Pt-Aluminiumoxid, Rh-Aluminiumoxid und unbehandeltes Cer/Zirkon-Mischoxid (90 Gew.-% Ceroxid und 10 Gew.-% Zirkonoxid), hergestellt. Nach dem Mahlen der Dispersion wurde eine Wabenkörper aus Cordierit damit beschichtet. Nach Trocknen der Beschichtung an Luft bei 300°C wies der Wabenkörper eine Beschichtungskonzentration von 210 g/l Wabenkörper auf. Anschließend wurde der Katalysator mit 25 g Bariumoxid durch Imprägnieren mit einer wäßrigen Bariumacetatlösung, Trocknen und vierstündigem Calcinieren an Luft bei 500°C belegt.

In diesem Beispiel wurde die Konzentration der Speicherkomponente Bariumoxid gegenüber allen anderen Beispielen von 16 g/l auf 25 g/l erhöht. Aufgrund des gewählten Herstellverfahrens für dieses Beispiel wurde nämlich nicht nur das erfindungsgemäß zu verwendende Trägermaterial Cer/Zirkon-Mischoxid mit Bariumoxid belegt, sondern auch die beiden Katalysatorpulver (Pt-Al$_2$O$_3$ und Rh-Al$_2$O$_3$). Um hierfür einen annähernden Ausgleich zu schaffen wurde die Konzentration des Bariumoxids auf dem Speicherkatalysator erhöht.

**Beispiel 17:**

Es wurde ein weiterer Katalysator entsprechend Beispiel 1 angefertigt. In Abweichung von Beispiel 1 wurde jedoch das Speichermaterial nicht durch Imprägnieren des Cer/Zirkon-Mischoxides mit Bariumacetat hergestellt, sondern mit Hilfe einer Fällungsreaktion mit Ammoniumcarbonat. Hierzu wurden 550 g Cer/Zirkon-Mischoxid (90 Gew.-% Ceroxid und 10 Gew.-% Zirkonoxid) in 700 ml Wasser dispergiert und 166 g Bariumacetat, entsprechend 100 g Bariumoxid, hinzugegeben. Unter ständigem Rühren wurde eine Lösung aus 63 g Ammoniumcarbonat in 300 ml Wasser langsam in die Dispersion getropft. Hierdurch fiel Barium in Form von unlöslichem Bariumcarbonat auf das Trägermaterial aus. Anschließend wurde die Dispersion nach Zugabe von 715 g Platin/Aluminiumoxid-Pulver und 101,5 g Rhodium/Aluminiumoxid-Pulver wie in Beispiel 1 beschrieben weiterverarbeitet, das heißt gemahlen, beschichtet und calciniert.

Dieses Herstellverfahren hat gegenüber dem in Beispiel 1 beschriebenen Verfahren den Vorteil, daß eine Calcinierung des Speichermaterials zur Überführung von Bariumacetat in Bariumoxid entfallen kann. Barium wird durch die Fällung direkt als Bariumcarbonat auf dem Trägermaterial fixiert.

**Beispiel 18:**

Es wurde ein weiterer Katalysator nach Beispiel 17 hergestellt. Als Fällungsreagenz wurde in diesem Beispiel eine wäßrige Lösung von 81 g Ammoniumoxalat in 1800 ml Wasser eingesetzt.

Wie die Diagramme der Figuren 1 bis 16 zeigen weisen die Katalysatoren der Vergleichsbeispiele 1 bis 4 eine annähernd gleiche Frischaktivität wie die erfindungsgemäßen Katalysatoren auf. Nach Alterung sinkt der Speicherwirkungsgrad der Vergleichskatalysatoren insbesondere im Temperaturbereich von 200 bis 350°C wesentlich stärker ab als bei den erfindungsgemäßen Katalysatoren. Die Verminderung des Speicherwirkungsgrades durch Alterung beträgt bei den Vergleichskatalysatoren meist um 40 bis 50%, während die Verschlechterung bei den erfindungsgemäßen Katalysatoren nur 10 bis 25% beträgt.

**Beispiel 19:**

Es wurde ein weiterer Katalysator entsprechend Beispiel 1 angefertigt. In Abweichung von Beispiel 1 wurde jedoch als Trägermaterial für die Speicherkomponente ein co-gefälltes Mischoxid aus 90 Gew.-% Ceroxid und 10 Gew.-% Praseodymoxid eingesetzt. Das Material hatte eine spezifische Oberfläche von 140 m$^2$/g.

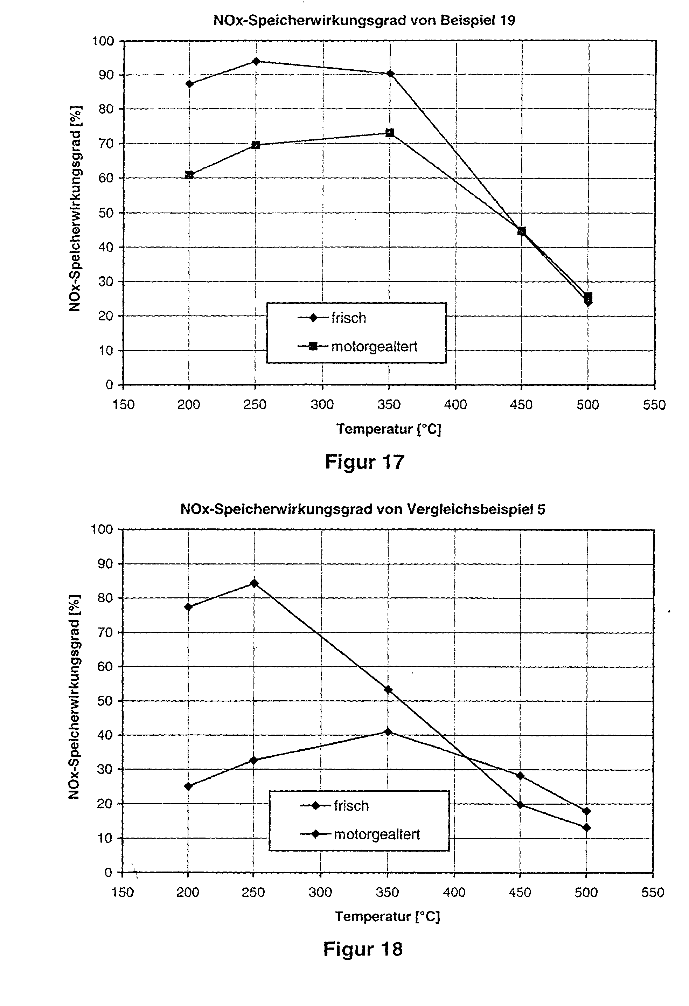

Der in Abhängigkeit von der Abgastemperatur gemessene NO$_x$-Speicherwirkungsgrad im frischen und gealterten Zustand des Katalysators ist in Figur 17 dargestellt.

**Vergleichsbeispiel 5:**

Es wurde ein weiterer Katalysator entsprechend Beispiel 1 angefertigt. Die Herstellung des Speichermaterials wurde jedoch an die in der DE 197 13 432 A1 beschriebene Herstellung des katalytischen Basismaterials angeglichen. Als Trägermaterial für die Speicherkomponente wurde reines Ceroxid mit einer spezifischen Oberfläche von 100 m$^2$/g eingesetzt. Nach dem Imprägnieren mit Bariumacetat wurde das Material getrocknet und, wie in Beispiel 1 der DE 197 13 432 A1 beschrieben, für die Dauer von 24 Stunden bei einer Temperatur von 900°C an Luft calciniert.

Der in Abhängigkeit von der Abgastemperatur gemessene NO$_x$-Speicherwirkungsgrad im frischen und gealterten Zustand des Katalysators ist in Figur 18 dargestellt.

Wie Figur 18 zeigt, weist das katalytische Basismaterial der DE 197 13 432 A1 unter der beschriebenen Alterung am Motor eine mangelhafte Stabilität auf. Schon im Frischzustand weist das Material unterhalb von 250°C einen geringeren Speicherwirkungsgrad als das erfindungsgemäße Speichermaterial auf. Oberhalb von 250°C fällt der Speicherwirkungsgrad darüber hinaus sehr schnell ab.

Dieser Abfall des Speicherwirkungsgrades bei hohen Temperaturen ist wahrscheinlich durch die großen Bariumoxid-Partikel bedingt, die sich bei der Calcinierung bei 900°C über die Dauer von 24 Stunden bilden. Die großen Partikel führen offenbar zu einer schlechten Dynamik der Abspeicherung der Stickoxide. Bei Temperaturen oberhalb von 250°C verschiebt sich das Gleichgewicht zwischen Stickstoffmonoxid und Stickstoffdioxid immer mehr zum Stickstoffmonoxid. Ein guter Speicherwirkungsgrad ist deshalb bei höheren Temperaturen nur noch dann zu erreichen, wenn das durch den Katalysator gebildete Stickstoffdioxid möglichst schnell aus dem Gleichgewicht durch Reaktion mit dem Speichermaterial entzogen wird. Hierzu sind die großen Bariumoxid-Partikel des katalytischen Basismaterials jedoch nicht in der Lage.

**Patentansprüche**

1. Stickoxid-Speichermaterial enthaltend wenigstens eine Speicherkomponente für Stickoxide in Form von Partikeln eines Oxides, Carbonates oder Hydroxides der Erdalkalimetalle Magnesium, Calcium, Strontium und Barium sowie der Alkalimetalle Kalium und Cäsium auf einem Trägermaterial, wobei
das Trägermaterial eine spezifische Oberfläche von wenigstens 10 m$^2$/g aufweist, ausgewählt ist aus der Gruppe dotiertes Ceroxid, Cer/Zirkon-Mischoxid, mit einem Zirkonoxidgehalt von 1 bis 25 Gew.-%, bezogen auf das Gesamtgewicht des Mischoxids, Calciumtitanat, Strontiumtitanat, Bariumtitanat, Bariumstannat, Bariumzirkonat, Magnesiumoxid, Lanthanoxid, Praseodymoxid, Samariumoxid, Neodymoxid, Yttriumoxid, Yttriumbariumcuprat, Bleititanat, Zinntitanat, Wismuttitanat, Lanthancobaltat, Lanthanmanganat und Bariumcuprat oder Mischungen davon, und daß die Partikel der Speicherkomponente mittlere Partikeldurchmesser von weniger als 1,5 μm aufweisen.

2. Stickoxid-Speichermaterial nach Anspruch 1, wobei
als Trägermaterial dotiertes Ceroxid verwendet wird, welches durch Co-Fällen, Co-Thermohydrolyse, Imprägnieren oder Auffällen mit 0,5 bis 20 Gew.-% mindestens eines Oxids eines Elementes aus der Gruppe gebildet aus Silicium, Scandium, Yttrium und den Seltenerdmetallen oder Mischungen davon, bezogen auf das Gesamtgewicht des Speichermaterials, dotiert ist.

3. Stickoxid-Speichermaterial nach Anspruch 1,
wobei
das Cer/Zirkon-Mischoxid zusätzlich durch Co-Fällen, Co-Thermohydrolyse, Imprägnieren oder Auffällen mit 0,5 bis 20 Gew.-% mindestens eines Oxids eines Elementes aus der Gruppe gebildet aus Silicium, Scandium, Yttrium und den Seltenerdmetallen oder Mischungen davon, bezogen auf das Gesamtgewicht des Speichermaterials, dotiert ist.

4. Stickoxid-Speichermaterial nach Anspruch 1,
wobei
es, bezogen auf das Gesamtgewicht des Speichermaterials, 10 bis 45 Gew.-% an Speicherkomponenten enthält.

5. Verfahren zur Herstellung des Speichermaterials nach einem der Ansprüche 1 bis 4, wobei
die Speicherkomponenten durch Imprägnieren mit wasserlöslichen Vorläuferverbindungen und anschließendem Trocknen und Calcinieren auf dem Trägermaterial abgeschieden werden, wobei Temperatur und Dauer der Calcinierung so gewählt werden, daß die Korngröße der sich ausbildenden Partikel der Speicherkomponenten kleiner

als 1,5 μm bleibt.

6. Verfahren zur Herstellung des Speichermaterials nach einem der Ansprüche 1 bis 4, wobei
die Speicherkomponenten durch Auffällen auf das in wäßriger Dispersion vorliegende Trägermaterial mittels eines Fällungsreagenzes, Trocknen und Calcinieren hergestellt werden, wobei Temperatur und Dauer der Calcinierung so gewählt werden, daß die Korngröße der sich ausbildenden Partikel der Speicherkomponenten kleiner als 1,5 μm bleibt.

7. Verfahren zur Herstellung des Speichermaterials nach einem der Ansprüche 1 bis 4, wobei
das Speichermaterial durch Co-Fällen aus einer wäßrigen Lösung von Vorläuferverbindungen des Trägermaterials und der Speicherkomponente und abschließendem Trocknen und Calcinieren gewonnen wird, wobei Temperatur und Dauer der Calcinierung so gewählt werden, daß die Korngröße der sich ausbildenden Domänen der Speicherkomponenten kleiner als 1,5 μm ist.

8. Stickoxid-Speicher enthaltend ein Speichermaterial in Form einer Beschichtung auf den Wandflächen der Strömungskanäle eines inerten Wabenkörpers aus Keramik oder Metall, wobei
es sich bei dem Speichermaterial um ein Material nach einem der Ansprüche 1 bis 4 handelt.

9. Stickoxid-Speicher nach Anspruch 8, wobei
die Beschichtung zusätzlich Speicherkomponenten auf Aluminiumoxid oder stabilisiertem Aluminiumoxid enthält.

10. Verwendung des Stickoxid-Speichers nach Anspruch 8 oder 9 zur Behandlung des Abgases von mager betriebenen Verbrennungsmotoren mit periodischem Wechsel von magerer Betriebsweise auf fette Betriebsweise, wobei die im Abgas enthaltenen Stickoxide unter mageren Abgasbedingungen vom Stickoxid-Speichermaterial gespeichert und unter fetten Abgasbedingungen wieder freigesetzt werden.

11. Stickoxid-Speicherkatalysator enthaltend wenigstens ein Stickoxid-Speichermaterial sowie wenigstens eines der Platinmetalle Platin, Palladium, Rhodium und Iridium in Form einer Beschichtung auf einem inerten Tragkörper, wobei
es sich bei dem Stickoxid-Speichermaterial um ein Material nach einem der Ansprüche 1 bis 4 handelt.

12. Stickoxid-Speicherkatalysator nach Anspruch 11, wobei
er zusätzlich Aluminiumoxid oder stabilisiertes Aluminiumoxid und wenigstens ein Sauerstoff speicherndes Material auf der Basis von Ceroxid enthält.

13. Stickoxid-Speicherkatalysator nach Anspruch 12, wobei
die Platinmetalle auf dem Aluminiumoxid oder dem stabilisierten Aluminiumoxid abgeschieden sind.

14. Stickoxid-Speicherkatalysator nach Anspruch 13, wobei
auf dem Aluminiumoxid oder auf dem stabilisiertem Aluminiumoxid und dem Sauerstoff speichernden Material ebenfalls Speicherkomponenten abgeschieden sind.

15. Verwendung des Stickoxid-Speicherkatalysators nach einem der Ansprüche 11 bis 14 zur Entfernung von Stickoxiden aus dem Abgas von mager betriebenen Verbrennungsmotoren mit periodischem Wechsel von magerer Betriebsweise auf fette Betriebsweise, wobei die Stickoxide unter mageren Betriebsbedingungen vom Stickoxid-Speicherkatalysator gespeichert und unter fetten Abgasbedingungen freigesetzt und an den katalytisch aktiven Komponenten mit Hilfe der im Abgas enthaltenen reduktiven Komponenten weitgehend zu Stickstoff reduziert werden.

**Claims**

1. A nitrogen oxide storage material containing at least one storage component for nitrogen oxides in the form of particles of an oxide, carbonate or hydroxide of the alkaline-earth metals magnesium, calcium, strontium and barium and of alkali metals potassium and caesium on a support material, wherein the support material has a specific surface area of at least 10 $m^2$/g and is selected from the group comprising doped cerium oxide, cerium/zirconium mixed oxide with a zirconium oxide content of 1 to 25 wt.%, with respect to the total weight of mixed oxide, calcium titanate, strontium titanate, barium titanate, barium stannate, barium zirconate, magnesium oxide, lanthanum oxide, praseodymium oxide, samarium oxide, neodymium oxide, yttrium oxide, yttrium barium cuprate, lead titanate, tin titanate, bismuth titanate, lanthanum cobaltate, lanthanum manganate and barium cuprate or mixtures thereof, and the particles in the storage component have an average particle diameter of less than 1.5 $\mu$m.

2. A nitrogen oxide storage material according to claim 1, wherein
a doped cerium oxide is used as support material, this being doped by co-precipitation, co-thermal hydrolysis, impregnation or precipitation with 0.5 to 20 wt.% of at least one oxide of an element from the group comprising silicon, scandium, yttrium and the rare earth metals or mixtures thereof, with respect to the total weight of storage material.

3. A nitrogen oxide storage material according to claim 1, wherein
the cerium/zirconium mixed oxide is additionally doped, by co-precipitation, co-thermal hydrolysis, impregnation or precipitation, with 0.5 to 20 wt.% of at least one oxide of an element from the group comprising silicon, scandium, yttrium and the rare earth metals or mixtures thereof, with respect to the total weight of storage material.

4. A nitrogen oxide storage material according to claim 1, wherein
it contains 10 to 45 wt.% of storage components, with respect to the total weight of storage material.

5. A process for preparing the storage material according to one of claims 1 to 4, wherein
the storage components are deposited onto the support material by impregnating with water-soluble precursor compounds and then drying and calcining, wherein the temperature and duration of calcination are chosen so that the size of the particles of the storage component being formed remains less than 1.5 $\mu$m.

6. A process for preparing the storage material according to one of claims 1 to 4, wherein
the storage components are prepared by precipitation onto the support material present in an aqueous dispersion using a precipitation reagent, drying and calcining, wherein the temperature and duration of calcination are chosen so that the size of the particles of the storage component being formed remains less than 1.5 $\mu$m.

7. A process for preparing the storage material according to one of claims 1 to 4, wherein
the storage material is obtained by co-precipitation from an aqueous solution of precursor compounds of the support material and the storage components and then drying and calcining, wherein the temperature and duration of calcination are chosen so that the size of the domains of storage components being formed is less than 1.5 $\mu$m.

8. A nitrogen oxide store containing a storage material in the form of a coating on the wall surfaces of the flow channels of an inert honeycomb structure made of ceramic or metal, wherein
the storage material is a material according to one of claims 1 to 4.

9. A nitrogen oxide store according to claim 8, wherein the coating contains additional storage components on aluminium oxide or stabilised aluminium oxide.

10. Use of the nitrogen oxide store according to claim 8 or 9, to treat exhaust gas from lean operating internal combustion engines with periodic alternation from lean operation to rich operation, wherein
the nitrogen oxides present in the exhaust gas are stored by the nitrogen oxide storage material under lean exhaust gas conditions and are released again under rich exhaust gas conditions.

11. A nitrogen oxide storing catalyst containing at least one nitrogen oxide storage material and at least one of the platinum metals platinum, palladium, rhodium and iridium in the form of a coating on an inert support structure, wherein
the nitrogen oxide storage material is a material according to one of claims 1 to 4.

12. A nitrogen oxide storing catalyst according to
claim 11, wherein
it also contains aluminium oxide or stabilised aluminium oxide and at least one oxygen storing material based on cerium oxide.

13. A nitrogen oxide storing catalyst according to claim 12, wherein
the platinum metals are deposited on the aluminium oxide or the stabilised aluminium oxide.

**14.** A nitrogen oxide storing catalyst according to claim 13, wherein
storage components are also deposited on the aluminium oxide or on the stabilised aluminium oxide and the oxygen storing material.

**15.** Use of the nitrogen oxide storing catalyst according to one of claims 11 to 14 to remove nitrogen oxides from the exhaust gas of lean operating internal combustion engines with periodic alternation from lean mode of operation to rich mode of operation, wherein
the nitrogen oxides are stored by the nitrogen oxide storing'catalyst under lean operating conditions and released under rich exhaust gas conditions and are largely reduced to nitrogen on the catalytically active components with the assistance of the reductive components present in the exhaust gas.

**Revendications**

**1.** Matériau de stockage d'oxyde d'azote contenant au moins un composant de stockage pour oxydes d'azote sous forme de particules d'un oxyde, d'un carbonate ou d'un hydroxyde des métaux alcalino-terreux magnésium, calcium, strontium et baryum, ainsi que des métaux alcalins potassium et césium sur un support, dans lequel
le support présente une surface spécifique d'au moins 10 $m^2$/g, et est choisi dans le groupe constitué par l'oxyde de cérium dopé, l'oxyde mixte de cérium/zirconium ayant une teneur en oxyde de zirconium allant de 1 à 25 % en poids, par rapport au poids total de l'oxyde mixte, le titanate de calcium, le titanate de strontium, le titanate de baryum, le stannate de baryum, le zirconate de baryum, l'oxyde de magnésium, l'oxyde de lanthane, l'oxyde de praséodyme, l'oxyde de samarium, l'oxyde de néodyme, l'oxyde d'yttrium, le cuprate d'yttrium-baryum, le titanate de plomb, le titanate d'étain, le titanate de bismuth, le cobaltate de lanthane, le manganate de lanthane et le cuprate de baryum ou leurs mélanges, et dans lequel
les particules du composant de stockage présentent un diamètre particulaire moyen de moins de 1,5 µm.

**2.** Matériau de stockage d'oxyde d'azote selon la revendication 1,
dans lequel
on utilise comme support l'oxyde de cérium dopé, lequel a été dopé, par co-précipitation, par co-thermohydrolyse, par imprégnation ou par précipitation, avec 0,5 à 20% en poids d'au moins un oxyde d'un élément du groupe formé par le silicium, le scandium, l'yttrium et les métaux de terres rares ou leurs mélanges, par rapport au poids total du matériau de stockage.

**3.** Matériau de stockage d'oxyde d'azote selon la revendication 1, dans lequel l'oxyde mixte de cérium/zirconium est en outre dopé, par co-précipitation, co-thermohydrolyse, imprégnation ou précipitation, avec de 0,5 à 20 % en poids d'au moins un oxyde d'un élément du groupe formé par le silicium, le scandium, l'yttrium et les métaux de terres rares ou leurs mélanges, par rapport au poids total du matériau de stockage.

**4.** Matériau de stockage d'oxyde d'azote selon la revendication 1,
qui contient, par rapport au poids total du matériau de stockage, de 10 à 45 % en poids de composants de stockage.

**5.** Procédé de fabrication du matériau de stockage selon l'une des revendications 1 à 4,
dans lequel
on dépose les composants de stockage par imprégnation avec des composés précurseurs solubles dans l'eau puis séchage et calcination sur le support, la température et la durée de la calcination étant choisies de manière que la granulométrie des particules du composant de stockage qui se forment reste inférieure à 1,5 µm.

**6.** Procédé de fabrication du matériau de stockage selon l'une des revendications 1 à 4,
dans lequel
les composants de stockage sont produits par précipitation sur le support qui se présente en dispersion aqueuse au moyen d'un réactif de précipitation, d'un séchage et d'une calcination, la température et la durée de la calcination étant choisies de manière que la granulométrie des particules du composant de stockage qui se forment reste inférieure à 1,5 µm.

**7.** Procédé de fabrication du matériau de stockage selon l'une des revendications 1 à 4,
dans lequel
le matériau de stockage est obtenu par co-précipitation à partir d'une solution aqueuse de composés précurseurs du matériau support et des composants de stockage, puis par séchage et calcination, la température et la durée de la calcination étant choisies de manière que la granulométrie des domaines des composants de stockage qui se forment soit inférieure à 1,5 μm.

8. Accumulateur d'oxyde d'azote contenant un matériau de stockage sous la forme d'un revêtement à la surface des parois des canaux d'écoulement d'un corps à nid d'abeilles en céramique ou en métal inerte,
dans lequel
le matériau de stockage, est un matériau selon l'une des revendications 1 à 4.

9. Accumulateur d'oxyde d'azote selon la revendication 8,
dans lequel
le revêtement contient en outre des composants de stockage sur oxyde d'aluminium ou oxyde d'aluminium stabilisé.

10. Utilisation de l'accumulateur d'oxyde d'azote selon la revendication 8 ou 9 pour le traitement des gaz usés de moteurs à combustion interne fonctionnant de façon pauvre avec changement périodique d'un mode de fonctionnement pauvre à un mode de fonctionnement riche,
selon laquelle
les oxydes d'azote contenus dans les gaz usés sont accumulés par le matériau de stockage d'oxyde d'azote dans des conditions de dégagement de gaz usés pauvres et à nouveau libérés dans des conditions de dégagement de gaz usés riches.

11. Catalyseur accumulateur d'oxyde d'azote contenant au moins un matériau de stockage d'oxyde d'azote ainsi qu'au moins un des métaux du groupe du platine, à savoir le platine, le palladium, le rhodium et l'iridium sous la forme d'un revêtement sur un support inerte,
dans lequel
le matériau de stockage d'oxyde d'azote, est un matériau selon l'une des revendications 1 à 4.

12. Catalyseur accumulateur d'oxyde d'azote selon la revendication 11, qui contient en outre de l'oxyde d'aluminium ou de l'oxyde d'aluminium stabilisé et au moins un matériau à base d'oxyde de cérium emmagasinant l'oxygène.

13. Catalyseur accumulateur d'oxyde d'azote selon la revendication 12, dans lequel
les métaux du groupe du platine sont déposés sur l'oxyde d'aluminium ou l'oxyde d'aluminium stabilisé.

14. Catalyseur accumulateur d'oxyde d'azote selon la revendication 13, dans lequel
sur l'oxyde d'aluminium ou sur l'oxyde d'aluminium stabilisé et le matériau de stockage de l'oxygène, sont également déposés des composants de stockage.

15. Utilisation du catalyseur de stockage d'oxyde d'azote selon l'une des revendications 11 à 14, pour l'élimination des oxydes d'azote des gaz usés de moteurs à combustion interne fonctionnant de façon pauvre avec changement périodique du mode de fonctionnement pauvre au mode de fonctionnement riche, où les oxydes d'azote sont emmagasinés par le catalyseur de stockage d'oxyde d'azote dans des conditions de fonctionnement pauvres et libérés dans des conditions de dégagement de gaz usés riches, et largement réduits en azote sur les composants catalytiquement actifs à l'aide des composants réducteurs contenus dans les gaz usés.

## Ermittlung des NOx-Speicherwirkungsgrades

Figur 1

## NOx-Speicherwirkungsgrad von Beispiel 1

Figur 2

**Figur 3**

**Figur 4**

NOx-Speicherwirkungsgrad von Vergleichsbeispiel 3

Figur 5

NOx-Speicherwirkungsgrad von Vergleichsbeispiel 4

Figur 6

**NOx-Speicherwirkungsgrad von Beispiel 2**

**Figur 7**

**NOx-Speicherwirkungsgrad von Beispiel 4**

**Figur 8**

EP 0 982 066 B1

**NOx-Speicherwirkungsgrad von Beispiel 5**

Figur 9

**NOx-Speicherwirkungsgrad von Beispiel 10**

Figur 10

NOx-Speicherwirkungsgrad von Beispiel 12

Figur 11

NOx-Speicherwirkungsgrad von Beispiel 13

Figur 12

## NOx-Speicherwirkungsgrad von Beispiel 14

**Figur 13**

## NOx-Speicherwirkungsgrad von Beispiel 15

**Figur 14**

**NOx-Speicherwirkungsgrad von Beispiel 16**

Figur 15

**NOx-Speicherwirkungsgrad von Beispiel 18**

Figur 16

**NOx-Speicherwirkungsgrad von Beispiel 19**

Figur 17

**NOx-Speicherwirkungsgrad von Vergleichsbeispiel 5**

Figur 18